# EUROPEAN PATENT APPLICATION

(11) **EP 3 128 596 A1**
(43) Date of publication of application: **08.02.2017**
(21) Application number: 15774459.0
(22) Date of filing: 27.03.2015
(51) Int. Cl.: H01M 10/0567, H01M 10/0525

(54) **NON-AQUEOUS ELECTROLYTIC SOLUTION, AND NON-AQUEOUS ELECTROLYTE SECONDARY CELL USING SAME**

(30) Priority: 31.03.2014 JP 2014072272
(71) Applicant: Mitsubishi Chemical Corporation, Chiyoda-ku Tokyo 100-8251 (JP)
(72) Inventor: YOSHIDA, Hiroaki, Inashiki-gun Ibaraki 300-0332 (JP)
(74) Representative: Vossius & Partner Patentanwälte Rechtsanwälte mbB
(86) International application number: PCT/JP2015/059608
(87) International publication number: WO 2015/152046

(57) **Abstract**

An object of the present invention is to provide an excellent non-aqueous electrolytic solution which is improved in the low-temperature discharge resistance and the capacity maintaining ratio upon high-temperature storage, and a non-aqueous electrolyte secondary battery using the same. The present invention is directed to a non-aqueous electrolytic solution comprising an electrolyte and a non-aqueous solvent, wherein the non-aqueous electrolytic solution contains a compound represented by the following formula (1) and a compound represented by the following formula (2): OCN-Q-NCO Formula (1) 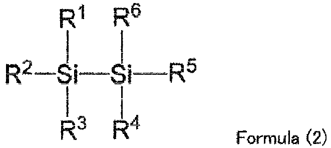 wherein, in the formulae (1) and (2), Q and R¹ to R⁶ represent predetermined groups.

## Description

### FIELD OF THE INVENTION

The present invention relates to a non-aqueous electrolytic solution and a non-aqueous electrolyte secondary battery using the same. More particularly, the present invention is concerned with a non-aqueous electrolytic solution containing a specific component for use in a secondary battery and a non-aqueous electrolyte secondary battery using the same.

### BACKGROUND ART

Industry has rapidly developed recently, and, as electronic devices are reduced in the size, a secondary battery used in the devices is strongly required to be further increased in the capacity. For meeting such demand, there have been developed a lithium secondary battery and others having a high energy density, as compared to a nickel-cadmium battery and a nickel-hydrogen battery, and repeated attempts to improve the secondary battery in performance have been made.

Components constituting the secondary battery are roughly divided into a positive electrode, a negative electrode, a separator, and an electrolytic solution. In these components, as the electrolytic solution, generally, a non-aqueous electrolytic solution is used, wherein the non-aqueous electrolytic solution is prepared by dissolving an electrolyte, such as LiPF₆, LiBF₄, LiClO₄, LiCF₃SO₃, LiAsF₆, LiN(CF₃SO₂)₂, or LiCF₃(CF₂)₃SO₃, in a non-aqueous solvent, for example, a cyclic carbonate, such as ethylene carbonate or propylene carbonate; a linear carbonate, such as dimethyl carbonate, diethyl carbonate, or ethylmethyl carbonate; a cyclic ester, such as γ-butyrolactone or γ-valerolactone; or a linear ester, such as methyl acetate or methyl propionate.

In recent years, there are problems to be solved on a global scale, such as environmental problems and energy problems. Under the circumstances, it is expected that a secondary battery, particularly a lithium secondary battery is applied to large-size power sources, such as a power source for automobile and a stationary power source. The batteries used as such power sources are generally expected to be used in an environment exposed to the outside air, and therefore are required to function in a wide range of temperatures. In the development of the batteries, an effort for improvement has been focused on the battery characteristics in an environment at low temperatures, particularly at subzero temperatures, especially on the low-temperature discharge resistance. In addition to this, the secondary battery is required to have more excellent life performance than that of a conventional secondary battery for the reason of the application thereof.

As a method for further improving the characteristics of secondary batteries including a lithium secondary battery, attempts to add various types of compounds to the above-mentioned electrolytic solution have been made.

For example, patent document 1 has reported that, by adding a predetermined compound having a Si-Si bond and a linear compound having an NCO structure to a non-aqueous electrolytic solution, excellent low-temperature discharge resistance and cycle characteristics can be obtained.

### PRIOR ART REFERENCE

### Patent Document

Patent document 1: Japanese Unexamined Patent Publication No. 2012-178340

### SUMMARY OF THE INVENTION

### Problems to be Solved by the Invention

As mentioned above, attempts have already been made to improve the secondary battery in the properties related to durability. However, satisfactory battery characteristics have not yet been achieved, and a further improvement is desired.

In view of the above-mentioned background art, the present invention has been made, and a task of the present invention is to provide an excellent non-aqueous electrolytic solution which is improved in the low-temperature discharge resistance and the capacity maintaining ratio upon high-temperature storage, and a secondary battery using the same.

### Means for Solving the Problems

The present inventors have conducted extensive and intensive studies with a view toward solving the above-mentioned problems. As a result, it has been found that when the non-aqueous electrolytic solution contains two types of specific compounds, the resultant secondary battery can be improved in both the low-temperature discharge resistance and the capacity maintaining ratio upon high-temperature storage, and the present invention has been completed.

Specifically, the gist of the present invention is as follows.
(a) A non-aqueous electrolytic solution comprising an electrolyte and a non-aqueous solvent, wherein the non-aqueous electrolytic solution contains a compound represented by the following formula (1) and a compound represented by the following formula (2):

   OCN-Q-NCO Formula (1)

   wherein Q represents a divalent organic group having 2 to 10 carbon atoms, wherein the organic group has a tertiary or quaternary carbon atom; 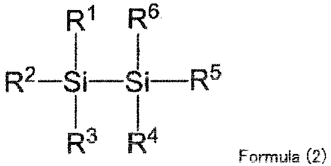 wherein each of R¹ to R⁶ independently represents a hydrogen atom, an alkyl group, alkynyl group, alkynyl group, or aryl group having 1 to 10 carbon atoms and optionally being substituted with a halogen atom, or a silane group having 1 to 10 silicon atoms and optionally being substituted with a halogen atom, and at least two of R¹ to R⁶ are optionally bonded together to form a ring.
(b) The non-aqueous electrolytic solution according to item (a) above, wherein, in the formula (1), Q has a cyclic skeleton.
(c) The non-aqueous electrolytic solution according to item (a) or (b) above, wherein, in the formula (2), R¹ to R⁶ are a hydrogen atom or an alkyl group having 1 to 4 carbon atoms and optionally being substituted with a halogen atom.
(d) The non-aqueous electrolytic solution according to any one of items (a) to (c) above, wherein, in the formula (1), Q has a cyclohexane skeleton.
(e) The non-aqueous electrolytic solution according to any one of items (a) to (d) above, wherein, in the formula (2), R¹ to R⁶ are a methyl group or an ethyl group.
(f) The non-aqueous electrolytic solution according to any one of items (a) to (e) above, wherein the compound represented by the formula (1) is a compound represented by the following formula: 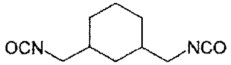
(g) The non-aqueous electrolytic solution according to any one of items (a) to (f) above, wherein the compound represented by the formula (2) is a compound represented by the following formula: 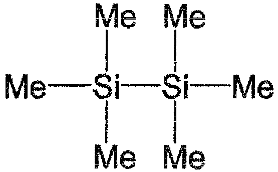
(h) The non-aqueous electrolytic solution according to any one of items (a) to (g) above, wherein the compound represented by the formula (1) is contained in an amount of 0.01 to 10% by mass, based on the total mass of the non-aqueous electrolytic solution.
(i) The non-aqueous electrolytic solution according to any one of items (a) to (h) above, wherein the compound represented by the formula (2) is contained in an amount of 0.01 to 10% by mass, based on the total mass of the non-aqueous electrolytic solution.
(j) The non-aqueous electrolytic solution according to any one of items (a) to (i) above, which further contains a compound which is reduced on a negative electrode during the first charging of a battery.
(k) The non-aqueous electrolytic solution according to item (j) above, wherein the compound which is reduced on a negative electrode is at least one member selected from the group consisting of vinylene carbonate, vinylethylene carbonate, fluoroethylene carbonate, succinic anhydride, lithium bis(oxalato)borate, lithium tetrafluorooxalatophosphate, lithium difluorobis(oxalato)phosphate, and lithium tris(oxalato)phosphate.
(l) The non-aqueous electrolytic solution according to item (j) or (k) above, wherein the compound which is reduced on a negative electrode is at least one member selected from the group consisting of vinylene carbonate, fluoroethylene carbonate, and lithium bis(oxalato)borate.
(m) A non-aqueous electrolyte secondary battery comprising a negative electrode capable of storing and releasing metal ions, a positive electrode capable of storing and releasing metal ions, and the non-aqueous electrolytic solution according to any one of items (a) to (1) above.
(n) The non-aqueous electrolyte secondary battery according to item (m) above, wherein the positive electrode capable of storing and releasing metal ions comprises a layer transition metal oxide, a spinel structure type oxide, or an olivine structure type oxide.
(o) The non-aqueous electrolyte secondary battery according to item (m) or (n) above, wherein the negative electrode capable of storing and releasing metal ions comprises a carbonaceous material.

### Effects of the Invention

By the present invention, there can be provided a non-aqueous electrolytic solution having excellent low-temperature discharge resistance and excellent capacity maintaining ratio upon high-temperature storage, and a secondary battery using the electrolytic solution.

### MODE FOR CARRYING OUT THE INVENTION

Hereinbelow, the present invention will be described in detail. The non-aqueous electrolytic solution of the present invention comprises an electrolyte and a non-aqueous solvent, and further the non-aqueous electrolytic solution contains a compound represented by the following formula (1) (hereinafter, frequently referred to as "specific NCO compound") and a compound represented by the following formula (2) (hereinafter, frequently referred to as "specific Si compound").

OCN-Q-NCO Formula (1)

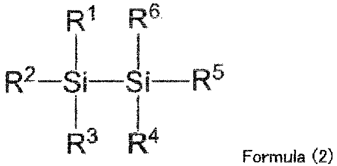

The presumed mechanism of the effects of the present invention is first described below. The above-mentioned specific NCO compound has an NCO group in the molecule thereof. The NCO group is known as a functional group having high reactivity, and, for example, it is known that the NCO group reacts with an OH group to form an urethane bond.

A carbonaceous material is generally used as a negative electrode material for a non-aqueous electrolyte secondary battery. It is known that a number of surface functional groups (such as an OH group and a COOH group) are present on the surface of the carbonaceous material. Further, it is known that a number of OM groups (wherein M is, for example, Li, Na, K, H, or Ca) are present in a film formed due to various factors on the negative electrode.

It is presumed that the NCO group of the specific NCO compound reacts with the functional group on the negative electrode or the OM group in the film to form an urethane bond. Thus, a component derived from the specific NCO compound is formed and deposited on the surface of the negative electrode. The deposited component is considered to function as a negative electrode film to suppress a side reaction of the non-aqueous solvent in the non-aqueous electrolytic solution (, so that a film is formed on the negative electrode as mentioned below). In this connection, it is noted that a disadvantage is also caused in that the film derived from the specific NCO compound deposited on the negative electrode increases the negative electrode resistance to some extent.

The above-mentioned specific NCO compound has two NCO groups in the molecule thereof. These two NCO groups independently react with the surface functional groups or film on the negative electrode, so that a stronger film can be formed on the negative electrode, effectively suppressing a side reaction of the non-aqueous solvent. Meanwhile, the increase of the negative electrode resistance becomes more marked. In the reactions of the NCO groups, it is considered that when the respective reactions of the two NCO groups occur nearby, the resultant film on the negative electrode has an increased density, so that the negative electrode resistance is likely to be increased. The specific NCO compound used in the present invention has been improved in the molecular structure as described below, and thus has succeeded in improving the negative electrode resistance.

The specific NCO compound is represented by the formula (1) above, and has a tertiary or quaternary carbon atom at Q in the structure thereof. It is expected that the principal chain of the specific NCO compound branches by virtue of the tertiary or quaternary carbon atom, achieving an effect that steric hindrance of the side chains causes the two NCO groups to be positioned appropriately apart from each other. It is considered that this effect prevents the above-mentioned increase of the film density, making it possible to suppress an increase of the resistance.

The above-mentioned specific Si compound has a Si-Si bond. It is known that the Si-Si bond suffers a nucleophilic attack to be cleaved. As mentioned above, a number of functional groups are present on the surface of the negative electrode. The functional groups are increased in nucleophilicity when the secondary battery is charged. In this instance, the surface functional group having higher nucleophilicity is considered to react with the specific Si compound. This reaction causes a film of the cleaved specific Si compound to be formed on the negative electrode, and the resultant film has a resistance lower than that of the below-mentioned film derived from the non-aqueous solvent, and therefore is considered to be able to suppress an increase of the resistance.

A film is deposited on the surface of the negative electrode, and the film includes one which is formed due to a nucleophilic attack of the surface functional groups on non-aqueous solvent molecules. In other words, the surface functional groups are closely related to the resistance of the negative electrode film.

When the surface functional groups of the negative electrode react with the specific Si compound, the surface functional groups are deactivated. The deactivated surface functional groups are markedly reduced in the properties for nucleophilic attack (and reduced in the reactivity with the specific NCO compound), so that the formation of a film derived from the non-aqueous solvent is suppressed. Thus, by adding the specific Si compound, it is possible to suppress an increase of the resistance of the surface of the negative electrode.

In the present invention, by using the specific NCO compound and specific Si compound in combination, both the low-temperature discharge resistance and the capacity maintaining ratio upon high-temperature storage are achieved more effectively than conventional. That is, the cause of the effects of the present invention is presumed to reside in that the specific NCO compound suppresses a side reaction of the non-aqueous solvent to improve the capacity maintaining ratio, and in that the low density of the negative electrode film derived from the specific NCO compound causes the negative electrode to be reduced in resistance and the low film density facilitates a reaction of the specific Si compound with the surface functional groups (so that a side reaction of the surface functional groups with the non-aqueous solvent is suppressed).

Hereinbelow, the constituents of the present invention will be individually described.

### [1. Non-aqueous electrolytic solution]

The non-aqueous electrolytic solution of the present invention comprises an electrolyte and a non-aqueous solvent, and further contains the below-described specific NCO compound and specific Si compound.

### [1-1. Specific NCO compound and specific Si compound]

### <1-1-1. Specific NCO compound>

As mentioned above, the specific NCO compound used in the present invention is represented by the following formula (1):

OCN-Q-NCO Formula (1)

wherein Q represents a divalent organic group having 2 to 10 carbon atoms, wherein the organic group has a tertiary or quaternary carbon atom.

The organic group has a hydrocarbon skeleton comprised mainly of carbon and hydrogen as a base skeleton, and may have a heteroatom and, as mentioned above, has a tertiary or quaternary carbon atom and forms a branched structure at that portion. In the present invention, the "branched structure" includes a structure formed from a cyclic structure having a certain group bonded to the carbon atom constituting the ring. The organic group has at least one tertiary or quaternary carbon atom, and may have two or more tertiary or quaternary carbon atoms.

Examples of the organic groups include a linear alkylene group having 2 to 10 carbon atoms and having at least one bonding to an NCO group at a portion other than the end of the chain, and optionally being substituted with a halogen atom (note that: with respect to a linear alkylene group having 2 carbon atoms (methylmethylene group), two NCO groups are bonded to the same carbon atom), a branched alkylene group having 3 to 10 carbon atoms and optionally being substituted with a halogen atom, a cycloalkylene group having 3 to 10 carbon atoms and optionally being substituted with a halogen atom, and an arylene group having 6 to 10 carbon atoms and optionally being substituted with a halogen atom.

As examples of halogen atoms with which each of the above groups can be substituted, there can be mentioned a fluorine atom, a chlorine atom, and a bromine atom. Of these, a fluorine atom is preferred from the viewpoint of improving the reactivity on the surface of the negative electrode.

In the above-mentioned organic groups, from the viewpoint of suppressing an increase of the negative electrode resistance, Q is preferably a divalent organic group of which the straight chain portion has 4 or more carbon atoms. From a similar point of view, as the organic group, organic groups having a cyclic skeleton are preferred, for example, organic groups having a cyclopentane skeleton or a cyclohexane skeleton are preferred, and organic groups having a cyclohexane skeleton are more preferred.

As preferred specific examples of the above-described Q's, there can be mentioned the following structures. 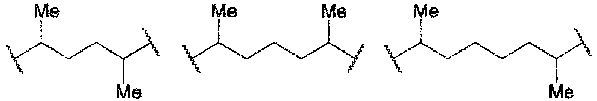 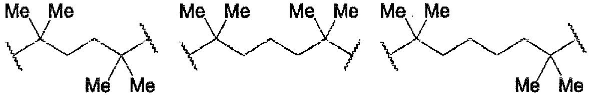 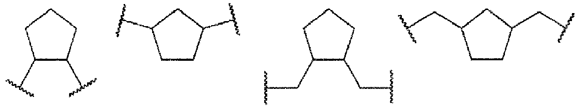 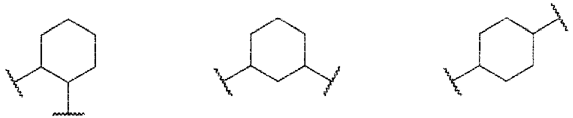 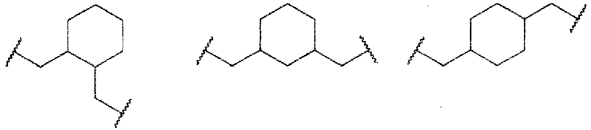 In each structure, a double wavy line indicates a bonding to an NCO group.

Accordingly, as preferred specific examples of the specific NCO compounds, there can be mentioned compounds respectively corresponding to the above-mentioned specific examples of Q's. Among these compounds, especially preferred is the following compound.

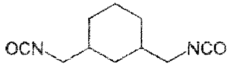

The reason why the above compound is especially preferred among the specific NCO compounds is described below. First, the two NCO groups are positioned appropriately apart from each other, and therefore, when the specific NCO compound forms a film on the negative electrode, the resultant film is unlikely to be increased in density, so that the resistance is unlikely to be increased. In addition, a cyclohexane ring is arranged between the two NCO groups, and hence steric hindrance of the cyclohexane ring can further prevent the NCO groups from being close to each other. These factors are expected to more effectively suppress an increase of the negative electrode resistance.

The above-described specific NCO compound is preferably contained in an amount of 0.01 to 10% by mass, more preferably in an amount of 0.1 to 2% by mass, based on the total mass of the non-aqueous electrolytic solution of the present invention (100% by mass). The reason for this is that when the amount of the specific NCO compound contained in the non-aqueous electrolytic solution is controlled to be in the above range, it is possible to prevent the compound from being present in an excess amount in the electrolytic solution. The specific NCO compound is used for the purpose of modifying an interface, such as a positive electrode/electrolytic solution interface or a negative electrode/electrolytic solution interface, and therefore it is preferred that the amount of the compound used is reduced to a minimum amount such that the purpose can be achieved. When the unreacted compound is present in an excess amount in the electrolytic solution, rather, the battery characteristics can be poor.

Further, in the present invention, the above-mentioned specific NCO compounds may be used individually or in combination.

### <1-1-2. Specific Si compound>

The specific Si compound used in the present invention is represented by the following formula (2): 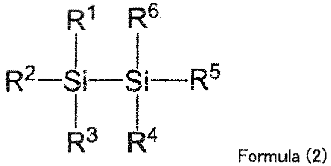 wherein each of R¹ to R⁶ independently represents a hydrogen atom, an alkyl group, alkenyl group, alkynyl group, or aryl group having 1 to 10 carbon atoms and optionally being substituted with a halogen atom, or a silane group having 1 to 10 silicon atoms and optionally being substituted with a halogen atom, and at least two of R¹ to R⁶ are optionally bonded together to form a ring.

As examples of halogen atoms with which the alkyl group, alkenyl group, alkynyl group, aryl group, or silane group may be substituted, there can be mentioned a fluorine atom, a chlorine atom, and a bromine atom. Of these, a fluorine atom is preferred from the viewpoint of improving the reactivity of the compound on a negative electrode.

Further, the alkyl group is preferably an alkyl group having 1 to 4 carbon atoms and optionally being substituted with a halogen atom from the viewpoint of suppressing steric hindrance of the specific Si compound which is reacting with the surface functional groups of the negative electrode. Examples of such alkyl groups include a methyl group, an ethyl group, a n-propyl group, an isopropyl group, a n-butyl group, a s-butyl group, and a t-butyl group.

The alkenyl group has 2 to 10 carbon atoms, and, from the viewpoint of suppressing steric hindrance of the specific Si compound which is reacting with the surface functional groups of the negative electrode, preferred is an alkenyl group having 2 to 3 carbon atoms and optionally being substituted with a halogen atom. Examples of such alkenyl groups include a vinyl group and an allyl group.

The alkynyl group has 2 to 10 carbon atoms, and, from the viewpoint of suppressing steric hindrance of the specific Si compound which is reacting with the surface functional groups of the negative electrode, preferred is an alkynyl group having 2 to 3 carbon atoms and optionally being substituted with a halogen atom. Examples of such alkynyl groups include an ethynyl group and a propargyl group.

The aryl group has 6 to 10 carbon atoms, and, from the viewpoint of suppressing steric hindrance of the specific Si compound which is reacting with the surface functional groups of the negative electrode, preferred is an aryl group having 6 to 7 carbon atoms and optionally being substituted with a halogen atom. Examples of such aryl groups include a phenyl group, a benzyl group, and a p-tolyl group.

The silane group is preferably a silane group having 1 to 2 silicon atoms from the viewpoint of suppressing steric hindrance of the specific Si compound which is reacting with the surface functional groups of the negative electrode. Examples of such silane groups include a silyl group, a methylsilyl group, a dimethylsilyl group, a trimethylsilyl group, and a (trimethylsilyl)silyl group.

Further, as mentioned above, at least two of R¹ to R⁶ may be bonded (together with Si or Si-Si) to form a ring. As an example of the thus formed ring, there can be mentioned cyclohexasilane.

Among the above-mentioned various groups, from the viewpoint of suppressing steric hindrance of the specific Si compound which is reacting with the surface functional groups of the negative electrode, R¹ to R⁶ are preferably a hydrogen atom or an alkyl group having 1 to 4 carbon atoms and optionally being substituted with a halogen atom. Specific examples of R¹'s to R⁶'s include a hydrogen atom, a methyl group, an ethyl group, a n-propyl group, an isopropyl group, a n-butyl group, a s-butyl group, and a t-butyl group. Of these, especially preferred are a methyl group and an ethyl group.

As apparent from the above, as specific examples of the specific Si compounds, there can be mentioned compounds with the number of the combinations of the above specific examples of R¹'s to R⁶'s. However, as preferred specific examples of the specific Si compounds, there can be mentioned the followings.

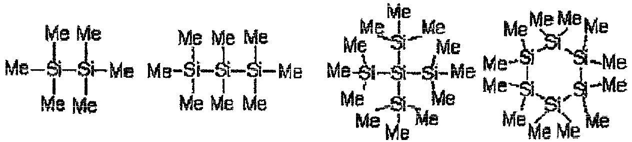

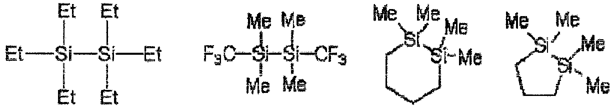

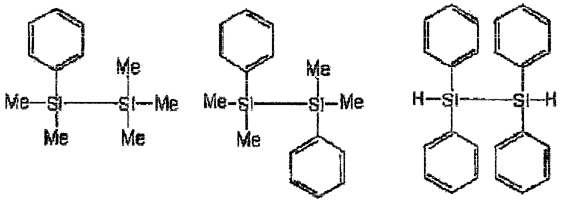

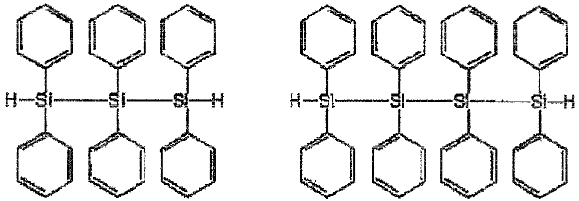

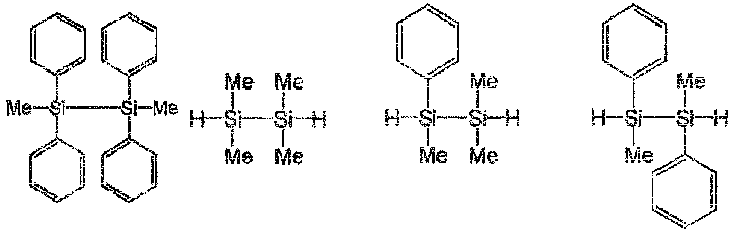

Among these, especially preferred are two compounds shown below, and the compound shown on the left side (hexamethyldisilane) is most preferred.

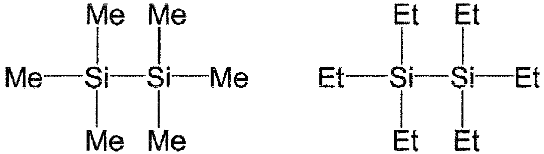

The reason why the above compounds are especially preferred among the specific Si compounds is described below. Generally, a methyl group and an ethyl group cause relatively small steric hindrance, and are unlikely inhibit an intermolecular reaction. For this reason, when R¹ to R⁶ are a methyl group or an ethyl group, a reaction of the specific Si compound on the negative electrode easily proceeds, so that an effect of suppressing the resistance can be more effectively exhibited.

From the viewpoint of the steric hindrance, a hydrogen atom is more preferred than a methyl group or an ethyl group. However, when R¹ to R⁶ are a hydrogen atom, the high activity of a Si-H bond possibly causes a side reaction. There is a fear that the side reaction contributes to deterioration of the battery characteristics, and therefore it is preferred that the side reaction does not occur. For the above reasons, among the specific Si compounds, the above-mentioned two compounds are especially preferred.

The above-described specific Si compound is preferably contained in an amount of 0.01 to 10% by mass, more preferably in an amount of 0.1 to 2% by mass, based on the total mass of the non-aqueous electrolytic solution of the present invention (100% by mass). The reason for this is that when the amount of the specific Si compound contained in the non-aqueous electrolytic solution is controlled to be in the above range, it is possible to prevent the compound from being present in an excess amount in the electrolytic solution. The specific Si compound is used for the purpose of modifying an interface, such as a positive electrode/electrolytic solution interface or a negative electrode/electrolytic solution interface, and therefore it is preferred that the amount of the compound used is reduced to a minimum amount such that the purpose can be achieved. When the unreacted compound is present in an excess amount in the electrolytic solution, rather, the battery characteristics can be poor.

Further, in the present invention, the above-mentioned specific Si compounds may be used individually or in combination.

### [1-2. Electrolyte]

### <Lithium salt>

The non-aqueous electrolytic solution comprises an electrolyte, and, in the present invention, generally, a lithium salt is used as the electrolyte. With respect to the lithium salt, there is no particular limitation as long as it is known to be used in the application related to the present invention, and an arbitrary lithium salt can be used. Specifically, there can be mentioned the followings.

Examples of lithium salts include inorganic lithium salts, such as LiPF₆, LiBF₄, LiClO₄, LiAlF₄, LiSbF₆, LiTaF₆, and LiWF₇;
lithium tungstates, such as LiWOF₅;
lithium carboxylates, such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li;
lithium sulfonates, such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, and CF₃CF₂CF₂CF₂SO₃Li;
lithium imide salts, such as LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, and LiN(CF₃SO₂)(C₄F₉SO₂);
lithium methide salts, such as LiC(FSO₂)₃, LiC(CF₃SO₂)₃, and LiC(C₂F₅SO₂)₃;
lithium oxalatoborates, such as lithium difluorooxalatoborate and lithium bis(oxalato)borate;
lithium oxalatophosphates, such as lithium tetrafluorooxalatophosphate, lithium difluorobis(oxalato)phosphate, and lithium tris(oxalato)phosphate; and
fluorine-containing organolithium salts, such as LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂.

Of these, especially preferred are LiPF₆, LiBF₄, LiSbF₆, LiTaF₆, FSO₃Li, CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, LiC(FSO₂)₃, LiC(CF₃SO₂)₃, LiC(C₂F₅SO₂)₃, lithium bisoxalatoborate, lithium difluorooxalatoborate, lithium tetrafluorooxalatophosphate, lithium difluorobisoxalatophosphate, LiBF₃CF₃, LiBF₃C₂F₅, LiPF₃(CF₃)₃, and LiPF₃(C₂F₅)₃ from the viewpoint of obtaining an effect of improving the non-aqueous electrolyte secondary battery obtained using the non-aqueous electrolytic solution of the present invention (hereinafter, frequently referred to simply as "secondary battery" or "non-aqueous electrolyte secondary battery") in, for example, output characteristics, high-rate charge-discharge characteristics, high-temperature storage characteristics, or cycle characteristics.

These lithium salts may be used individually or in combination. When two or more of the lithium salts are used in combination, preferred examples of the combinations include a combination of LiPF₆ and LiBF₄ and a combination of LiPF₆ and FSO₃Li, and the use of the above lithium salts in combination has an effect of improving the secondary battery in load characteristics or cycle characteristics.

In this case, the concentration of LiBF₄ or FSO₃Li in the non-aqueous electrolytic solution (100% by mass) is not limited, and is arbitrary as long as the effects of the present invention are not markedly sacrificed. The amount of the LiBF₄ or FSO₃Li incorporated is generally 0.01% by mass or more, preferably 0.1% by mass or more, and is generally 30% by mass or less, preferably 20% by mass or less, based on the mass of the non-aqueous electrolytic solution of the present invention.

Other examples include the use of an inorganic lithium salt and an organolithium salt in combination, and the use of these salts in combination has an effect of suppressing deterioration of the secondary battery due to storage at high temperatures. With respect to the organolithium salt, preferred are CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, LiC(FSO₂)₃, LiC(CF₃SO₂)₃, LiC(C₂F₅SO₂)₃, lithium bisoxalatoborate, lithium difluorooxalatoborate, lithium tetrafluorooxalatophosphate, lithium difluorobisoxalatophosphate, LiBF₃CF₃, LiBF₃C₂F₅, LiPF₃(CF₃)₃, and LiPF₃(C₂F₅)₃.

In this case, the amount of the organolithium salt contained is preferably 0.1 % by mass or more, especially preferably 0.5% by mass or more, and is preferably 30% by mass or less, especially preferably 20% by mass or less, based on the total mass of the non-aqueous electrolytic solution (100% by mass).

With respect to the concentration of the above-described lithium salt in the non-aqueous electrolytic solution, there is no particular limitation as long as the effects of the present invention are not sacrificed. From the viewpoint of obtaining the non-aqueous electrolytic solution having an electrical conductivity in an advantageous range to secure excellent battery performance, the total molar concentration of the lithium salt in the non-aqueous electrolytic solution is preferably 0.3 mol/L or more, more preferably 0.4 mol/L or more, further preferably 0.5 mol/L or more, and is preferably 3 mol/L or less, more preferably 2.5 mol/L or less, further preferably 2.0 mol/L or less.

When the total molar concentration of the lithium salt is too small, the non-aqueous electrolytic solution is likely to be unsatisfactory in the electrical conductivity. On the other hand, when the lithium salt concentration is too high, the non-aqueous electrolytic solution is likely to be increased in viscosity to reduce the electrical conductivity, causing the battery performance to become poor.

### [1-3. Non-aqueous solvent]

With respect to the non-aqueous solvent in the non-aqueous electrolytic solution of the present invention, there is no particular limitation, and a known organic solvent can be used. Examples of known organic solvents include cyclic carbonates having no fluorine atom, linear carbonates, cyclic or linear carboxylates, ether compounds, and sulfone compounds.

### <Cyclic carbonate having no fluorine atom>

As examples of the cyclic carbonates having no fluorine atom, there can be mentioned cyclic carbonates having an alkylene group having 2 to 4 carbon atoms.

Specific examples of cyclic carbonates having no fluorine atom and having an alkylene group having 2 to 4 carbon atoms include ethylene carbonate, propylene carbonate, and butylene carbonate. Of these, especially preferred are ethylene carbonate and propylene carbonate from the viewpoint of the improvement of the battery characteristics due to an improvement of the degree of dissociation of lithium ions.

The cyclic carbonates having no fluorine atom may be used individually, or two or more types of the cyclic carbonates having no fluorine atom may be used in an arbitrary combination and in an arbitrary ratio.

With respect to the amount of the cyclic carbonate having no fluorine atom incorporated, there is no particular limitation, and the amount is arbitrary as long as the effects of the present invention are not markedly sacrificed. When one type of the cyclic carbonate having no fluorine atom is solely used, the amount of the cyclic carbonate incorporated is generally 5% by volume or more, more preferably 10% by volume or more, based on the volume of the non-aqueous solvent (100% by volume). When the amount of the cyclic carbonate having no fluorine atom incorporated is in the above range, a reduction of the electrical conductivity due to a lowering of the permittivity of the non-aqueous electrolytic solution can be avoided, so that the large-current discharge characteristics of the non-aqueous electrolyte secondary battery, the stability of the negative electrode, and the cycle characteristics in their respective advantageous ranges can be easily achieved. Further, the amount of the cyclic carbonate having no fluorine atom incorporated is generally 95% by volume or less, more preferably 90% by volume or less, further preferably 85% by volume or less, based on the volume of the non-aqueous solvent (100% by volume). When the amount of the cyclic carbonate having no fluorine atom incorporated is in the above range, the resultant non-aqueous electrolytic solution has a viscosity in an appropriate range, so that not only can a reduction of the ionic conductivity be suppressed, but also the load characteristics of the non-aqueous electrolyte secondary battery in an advantageous range can be easily achieved.

### <Linear carbonate>

With respect to the linear carbonate, linear carbonates having 3 to 7 carbon atoms are preferred, and dialkyl carbonates having 3 to 7 carbon atoms are more preferred.

Specific examples of the linear carbonates include dimethyl carbonate, diethyl carbonate, di-n-propyl carbonate, diisopropyl carbonate, n-propylisopropyl carbonate, ethylmethyl carbonate, methyl-n-propyl carbonate, n-but-ylmethyl carbonate, isobutylmethyl carbonate, t-butylmethyl carbonate, ethyl-n-propyl carbonate, n-butylethyl carbonate, isobutylethyl carbonate, and t-butylethyl carbonate.

Of these, preferred are dimethyl carbonate, dimethyl carbonate, di-n-propyl carbonate, diisopropyl carbonate, n-propylisopropyl carbonate, ethylmethyl carbonate, and methyl-n-propyl carbonate, and especially preferred are dimethyl carbonate, diethyl carbonate, and ethylmethyl carbonate.

Further, a linear carbonate having a fluorine atom (hereinafter, frequently referred to as "fluorinated linear carbonate") can be preferably used.

With respect to the number of fluorine atoms that the fluorinated linear carbonate has, there is no particular limitation as long as the number is 1 or more, and the number of fluorine atoms is generally 6 or less, preferably 4 or less. When the fluorinated linear carbonate has a plurality of fluorine atoms, the fluorine atoms may be either bonded to the same carbon or bonded to different carbons.

Examples of fluorinated linear carbonates include fluorinated dimethyl carbonates and derivatives thereof, fluorinated ethylmethyl carbonates and derivatives thereof, and fluorinated diethyl carbonates and derivatives thereof.

Examples of fluorinated dimethyl carbonates and derivatives thereof include fluoromethylmethyl carbonate, difluoromethylmethyl carbonate, trifluoromethylmethyl carbonate, bis(fluoromethyl) carbonate, bis(difluoro)methyl carbonate, and bis(trifluoromethyl) carbonate.

Examples of fluorinated ethylmethyl carbonates and derivatives thereof include 2-fluoroethylmethyl carbonate, ethylfluoromethyl carbonate, 2,2-difluoroethylmethyl carbonate, 2-fluoroethylfluoromethyl carbonate, ethyldifluoromethyl carbonate, 2,2,2-trifluoroethylmethyl carbonate, 2,2-difluoroethylfluoromethyl carbonate, 2-fluoroethyldifluoromethyl carbonate, and ethyltrifluoromethyl carbonate.

Examples of fluorinated diethyl carbonates and derivatives thereof include ethyl-(2-fluoroethyl) carbonate, ethyl-(2,2-difluoroethyl) carbonate, bis(2-fluoroethyl) carbonate, ethyl-(2,2,2-trifluoroethyl) carbonate, 2,2-difluoroethyl-2'-fluoroethyl carbonate, bis(2,2-difluoroethyl) carbonate, 2,2,2-trifluoroethyl-2'-fluoroethyl carbonate, 2,2,2-trifluoroethyl-2',2'-difluoroethyl carbonate, and bis(2,2,2-trifluoroethyl) carbonate.

The above-mentioned linear carbonates may be used individually, or two or more types of the linear carbonates may be used in an arbitrary combination and in an arbitrary ratio.

The amount of the linear carbonate incorporated is preferably 5% by volume or more, more preferably 10% by volume or more, further preferably 15% by volume or more, based on the volume of the non-aqueous solvent (100% by volume). When the lower limit of the amount is set as shown above, the resultant non-aqueous electrolytic solution has a viscosity in an appropriate range, so that not only can a reduction of the ionic conductivity be suppressed, but also the large-current discharge characteristics of the non-aqueous electrolyte secondary battery in an advantageous range can be easily achieved. Further, the amount of the linear carbonate incorporated is preferably 90% by volume or less, more preferably 85% by volume or less, based on the volume of the non-aqueous solvent (100% by volume). When the upper limit of the amount is set as shown above, a reduction of the electrical conductivity due to a lowering of the permittivity of the non-aqueous electrolytic solution can be avoided, so that the large-current discharge characteristics of the non-aqueous electrolyte secondary battery in an advantageous range can be easily achieved.

### <Cyclic carboxylate>

With respect to the cyclic carboxylate, ones having 3 to 12 carbon atoms are preferred.

Specific examples of the cyclic carboxylates include gamma-butyrolactone, gamma-valerolactone, gamma-caprolactone, and epsilon-caprolactone. Of these, especially preferred is gamma-butyrolactone from the viewpoint of the improvement of the battery characteristics due to an improvement of the degree of dissociation of lithium ions.

The cyclic carboxylates may be used individually, or two or more types of the cyclic carboxylates may be used in an arbitrary combination and in an arbitrary ratio.

The amount of the cyclic carboxylate incorporated is preferably 5% by volume or more, more preferably 10% by volume or more, based on the volume of the non-aqueous solvent (100% by volume). When the amount of the cyclic carboxylate incorporated is in the above range, the non-aqueous electrolytic solution can be improved in electrical conductivity, so that the large-current discharge characteristics of the non-aqueous electrolyte secondary battery can be easily improved. Further, the amount of the cyclic carboxylate incorporated is preferably 50% by volume or less, more preferably 40% by volume or less, based on the volume of the non-aqueous solvent (100% by volume). When the upper limit of the amount is set as shown above, the resultant non-aqueous electrolytic solution has a viscosity in an appropriate range, and a reduction of the electrical conductivity can be avoided to suppress an increase of the negative electrode resistance, so that the large-current discharge characteristics of the non-aqueous electrolyte secondary battery in an advantageous range can be easily achieved.

### <Linear carboxylate>

With respect to the linear carboxylate, ones having 3 to 7 carbon atoms are preferred. Specific examples of the linear carboxylates include methyl acetate, ethyl acetate, n-propyl acetate, isopropyl acetate, n-butyl acetate, isobutyl acetate, t-butyl acetate, methyl propionate, ethyl propionate, n-propyl propionate, isopropyl propionate, n-butyl propionate, isobutyl propionate, t-butyl propionate, methyl butyrate, ethyl butyrate, n-propyl butyrate, isopropyl butyrate, methyl isobutyrate, ethyl isobutyrate, n-propyl isobutyrate, and isopropyl isobutyrate.

Among these, preferred are methyl acetate, ethyl acetate, n-propyl acetate, n-butyl acetate, methyl propionate, ethyl propionate, n-propyl propionate, isopropyl propionate, methyl butyrate, and ethyl butyrate from the viewpoint of the improvement of ionic conductivity due to a reduction of the viscosity of the non-aqueous electrolytic solution.

The above-mentioned linear carboxylates may be used individually, or two or more types of the linear carboxylates may be used in an arbitrary combination and in an arbitrary ratio.

The amount of the linear carboxylate incorporated is preferably 10% by volume or more, more preferably 15% by volume or more, based on the volume of the non-aqueous solvent (100% by volume). When the lower limit of the amount is set as shown above, the non-aqueous electrolytic solution can be improved in electrical conductivity, so that the large-current discharge characteristics of the non-aqueous electrolyte secondary battery can be easily improved. Further, the amount of the linear carboxylate incorporated is preferably 60% by volume or less, more preferably 50% by volume or less, based on the volume of the non-aqueous solvent (100% by volume). When the upper limit of the amount is set as shown above, an increase of the negative electrode resistance can be suppressed, so that the large-current discharge characteristics and cycle characteristics of the non-aqueous electrolyte secondary battery in their respective advantageous ranges can be easily achieved.

### <Ether compound>

With respect to the ether compound, linear ethers having 3 to 10 carbon atoms and optionally having part of hydrogens thereof replaced by fluorine, and cyclic ethers having 3 to 6 carbon atoms are preferred.

Examples of the linear ethers having 3 to 10 carbon atoms include diethyl ether, di(2-fluoroethyl) ether, di(2,2-difluoroethyl) ether, di(2,2,2-trifluoroethyl) ether, ethyl(2-fluoroethyl) ether, ethyl(2,2,2-trifluoroethyl) ether, ethyl(1,1,2,2-tetrafluoroethyl) ether, (2-fluoroethyl)(2,2,2-trifluoroethyl) ether, (2-fluoroethyl)(1,1,2,2-tetrafluoroethyl) ether, (2,2,2-trifluoroethyl)(1,1,2,2-tetrafluoroethyl) ether, ethyl-n-propyl ether, ethyl(3-fuoro-n-propyl) ether, ethyl(3,3,3-trifluoro-n-propyl) ether, ethyl(2,2,3,3-tetrafluoro-n-propyl) ether, ethyl(2,2,3,3,3-pentafluoro-n-propyl) ether, 2-fluoroethyl-n-propyl ether, (2-fluoroethyl)(3-fluoro-n-propyl) ether, (2-fluoroethyl)(3,3,3 -trifluoro-n-propyl) ether, (2-fluoroethyl)(2,2,3,3-tetrafluoro-n-propyl) ether, (2-fluoroethyl)(2,2,3,3,3-pentafluoro-n-propyl) ether, 2,2,2-trifluoroethyl-n-propyl ether, (2,2,2-trifluoroethyl)(3-fluoro-n-propyl) ether, (2,2,2-trifluoroethyl)(3,3,3-trifluoro-n-propyl) ether, (2,2,2-trifluoroethyl)(2,2,3,3-tetrafluoro-n-propyl) ether, (2,2,2-trifluoroethyl)(2,2,3,3,3-pentafluoro-n-propyl) ether, 1,1,2,2-tetrafluoroethyl-n-propyl ether, (1,1,2,2-tetrafluoroethyl)(3-fluoro-n-propyl) ether, (1,1,2,2-tetrafluoroethyl)(3,3,3-trifluoro-n-propyl) ether, (1,1,2,2-tetrafluoroethyl)(2,2,3,3-tetrafluoro-n-propyl) ether, (1,1,2,2-tetrafluoroethyl)(2,2,3,3,3-pentafluoro-n-propyl) ether, di-n-propyl ether, (n-propyl)(3-fluoro-n-propyl) ether, (n-propyl)(3,3,3-trifluoro-n-propyl) ether, (n-propyl)(2,2,3,3-tetrafluoro-n-propyl) ether, (n-propyl)(2,2,3,3,3-pentafluoro-n-propyl) ether, di(3-fluoro-n-propyl) ether, (3-fluoro-n-propyl)(3,3,3-trifluoro-n-propyl) ether, (3-fluoro-n-propyl)(2,2,3,3-tetrafluoro-n-propyl) ether, (3-fluoro-n-propyl)(2,2,3,3,3-pentafluoro-n-propyl) ether, di(3,3,3-trifluoro-n-propyl) ether, (3,3,3-trifluoro-n-propyl)(2,2,3,3-tetrafluoro-n-propyl) ether, (3,3,3-trifluoro-n-propyl)(2,2,3,3,3-pentafluoro-n-propyl) ether, di(2,2,3,3-tetrafluoro-n-propyl) ether, (2,2,3,3-tetrafluoro-n-propyl)(2,2,3,3,3-pentafluoro-n-propyl) ether, di(2,2,3,3,3-pentafluoro-n-propyl) ether, di-n-butyl ether, dimethoxymethane, methoxyethoxymethane, methoxy(2-fluoroethoxy)methane, methoxy(2,2,2-trifluoroethoxy)methanemethoxy(1,1,2,2-tetrafluoroethoxy)methane, diethoxymethane, ethoxy(2-fluoroethoxy)methane, ethoxy(2,2,2-trifluoroethoxy)methane, ethoxy(1,1,2,2-tetrafluoroethoxy)methane, di(2-fluoroethoxy)methane, (2-fluoroethoxy)(2,2,2-trifluoroethoxy)methane, (2-fluoroethoxy)(1,1,2,2-tetrafluoroethoxy)methanedi(2,2,2-trifluoroethoxy)methane, (2,2,2-trifluoroethoxy)(1,1,2,2-tetrafluoroethoxy)methane, di(1,1,2,2-tetrafluoroethoxy)methane, dimethoxyethane, methoxyethoxyethane, methoxy(2-fluoroethoxy)ethane, methoxy(2,2,2-trifluoroethoxy)ethane, methoxy(1,1,2,2-tetrafluoroethoxy)ethane, diethoxyethane, ethoxy(2-fluoroethoxy)ethane, ethoxy(2,2,2-trifluoroethoxy)ethane, ethoxy(1,1,2,2-tetrafluoroethoxy)ethane, di(2-fluoroethoxy)ethane, (2-fluoroethoxy)(2,2,2-trifluoroethoxy)ethane, (2-fluoroethoxy)(1,1,2,2-tetrafluoroethoxy)ethane, di(2,2,2-trifluoroethoxy)ethane, (2,2,2-trifluoroethoxy)(1,1,2,2-tetrafluoroethoxy)ethane, di(1,1,2,2-tetrafluoroethoxy)ethane, ethylene glycol di-n-propyl ether, ethylene glycol di-n-butyl ether, and diethylene glycol dimethyl ether.

Examples of the cyclic ethers having 3 to 6 carbon atoms include tetrahydrofuran, 2-methyltetrahydrofuran, 3-methyltetrahydrofuran, 1,3-dioxane, 2-methyl-1,3-dioxane, 4-methyl-1,3-dioxane, 1,4-dioxane, and fluorinated compounds thereof.

Among the above-mentioned ether compounds, preferred are dimethoxymethane, diethoxymethane, ethoxymethoxymethane, ethylene glycol di-n-propyl ether, ethylene glycol di-n-butyl ether, and diethylene glycol dimethyl ether because they have high solvating power for lithium ions such that the resultant solution has improved ionic dissociation, and especially preferred are dimethoxymethane, diethoxymethane, and ethoxymethoxymethane because they have a low viscosity such that the resultant solution has high ionic conductivity.

These ether compounds may be used individually, or two or more types of the ether compounds may be used in an arbitrary combination and in an arbitrary ratio.

The amount of the ether compound incorporated is, based on the volume of the non-aqueous solvent (100% by volume), preferably 5% by volume or more, more preferably 10% by volume or more, further preferably 15% by volume or more, and is preferably 70% by volume or less, more preferably 60% by volume or less, further preferably 50% by volume or less.

When the amount of the ether compound incorporated is in the above range, an effect of improving the ionic conductivity obtained due to the improvement of the degree of dissociation of lithium ions in the ether compound and the reduction of the viscosity can be easily secured, and, when the below-mentioned negative electrode active material is a carbonaceous material, a disadvantage can be easily avoided in that the linear ether is co-inserted together with lithium ions to lower the battery capacity.

### <Sulfone compound>

With respect to the sulfone compound, cyclic sulfones having 3 to 6 carbon atoms and linear sulfones having 2 to 6 carbon atoms are preferred. The number of the sulfonyl group or groups per molecule of the sulfone compound is preferably 1 or 2.

Examples of the cyclic sulfones having 3 to 6 carbon atoms include monosulfone compounds, such as trimethylene sulfones, tetramethylene sulfones, and hexamethylene sulfones; and disulfone compounds, such as trimethylene disulfones, tetramethylene disulfones, and hexamethylene disulfones.

Of these, from the viewpoint of the permittivity and viscosity, more preferred are tetramethylene sulfones, tetramethylene disulfones, hexamethylene sulfones, and hexamethylene disulfones, and especially preferred are tetramethylene sulfones (sulfolanes).

With respect to the above-mentioned sulfolanes, sulfolane and/or sulfolane derivatives (hereinafter, frequently referred to as "sulfolanes" including sulfolane) are preferred. With respect to the sulfolane derivatives, preferred are ones in which one or more hydrogen atoms bonded to the carbon atom(s) constituting the sulfolane ring are replaced by a fluorine atom or an alkyl group.

Of these, preferred are 2-methylsulfolane, 3-methylsulfolane, 2-fluorosulfolane, 3-fluorosulfolane, 2,2-difluorosulfolane, 2,3-difluorosulfolane, 2,4-difluorosulfolane, 2,5-difluorosulfolane, 3,4-difluorosulfolane, 2-fluoro-3-methylsulfolane, 2-fluoro-2-methylsulfolane, 3-fluoro-3-methylsulfolane, 3-fluoro-2-methylsulfolane, 4-fluoro-3-methylsulfolane, 4-fluoro-2-methylsulfolane, 5-fluoro-3-methylsulfolane, 5-fluoro-2-methylsulfolane, 2-fluoromethylsulfolane, 3-fluoromethylsulfolane, 2-difluoromethylsulfolane, 3-difluoromethylsulfolane, 2-trifluoromethylsulfolane, 3-trifluoromethylsulfolane, 2-fluoro-3-(trifluoromethyl)sulfolane, 3-fluoro-3-(trifluoromethyl)sulfolane, 4-fluoro-3-(trifluoromethyl)sulfolane, and 5-fluoro-3-(trifluoromethyl)sulfolane from the viewpoint of high ionic conductivity and high input/output characteristics.

Examples of the linear sulfones having 2 to 6 carbon atoms include dimethyl sulfone, ethylmethyl sulfone, diethyl sulfone, n-propylmethyl sulfone, n-propylethyl sulfone, di-n-propyl sulfone, isopropylmethyl sulfone, isopropylethyl sulfone, diisopropyl sulfone, n-butylmethyl sulfone, n-butylethyl sulfone, t-butylmethyl sulfone, t-butylethyl sulfone, monofluoromethylmethyl sulfone, difluoromethylmethyl sulfone, trifluoromethylmethyl sulfone, monofluoroethylmethyl sulfone, difluoroethylmethyl sulfone, trifluoroethylmethyl sulfone, pentafluoroethylmethyl sulfone, ethylmonofluoromethyl sulfone, ethyldifluoromethyl sulfone, ethyltrifluoromethyl sulfone, perfluoroethylmethyl sulfone, ethyltrifluoroethyl sulfone, ethylpentafluoroethyl sulfone, di(trifluoroethyl) sulfone, perfluorodiethyl sulfone, fluoromethyl-n-propyl sulfone, difluoromethyl-n-propyl sulfone, trifluoromethyl-n-propyl sulfone, fluoromethylisopropyl sulfone, difluoromethylisopropyl sulfone, trifluoromethylisopropyl sulfone, trifluoroethyl-n-propyl sulfone, trifluoroethylisopropyl sulfone, pentafluoroethyl-n-propyl sulfone, pentafluoroethylisopropyl sulfone, trifluoroethyl-n-butyl sulfone, trifluoroethyl-t-butyl sulfone, pentafluoroethyl-n-butyl sulfone, and pentafluoroethyl-t-butyl sulfone.

Of these, preferred are dimethyl sulfone, ethylmethyl sulfone, diethyl sulfone, n-propylmethyl sulfone, isopropylmethyl sulfone, n-butylmethyl sulfone, t-butylmethyl sulfone, monofluoromethylmethyl sulfone, difluoromethylmethyl sulfone, trifluoromethylmethyl sulfone, monofluoroethylmethyl sulfone, difluoroethylmethyl sulfone, trifluoroethylmethyl sulfone, pentafluoroethylmethyl sulfone, ethylmonofluoromethyl sulfone, ethyldifluoromethyl sulfone, ethyltrifluoromethyl sulfone, ethyltrifluoroethyl sulfone, ethylpentafluoroethyl sulfone, trifluoromethyl-n-propyl sulfone, trifluoromethylisopropyl sulfone, trifluoroethyl-n-butyl sulfone, trifluoroethyl-t-butyl sulfone, trifluoromethyl-n-butyl sulfone, and trifluoromethyl-t-butyl sulfone from the viewpoint of high ionic conductivity and high input/output characteristics.

The above-mentioned sulfone compounds may be used individually, or two or more types of the sulfone compounds may be used in an arbitrary combination and in an arbitrary ratio.

The amount of the sulfone compound incorporated is, based on the volume of the non-aqueous solvent (100% by volume), preferably 0.3% by volume or more, more preferably 1% by volume or more, further preferably 5% by volume or more, and is preferably 40% by volume or less, more preferably 35% by volume or less, further preferably 30% by volume or less.

When the amount of the sulfone compound incorporated is in the above range, an effect of improving durability of the non-aqueous electrolyte secondary battery, such as cycle characteristics and storage characteristics, can be easily obtained, and further the resultant non-aqueous electrolytic solution has a viscosity in an appropriate range, and thus a reduction of the electrical conductivity can be avoided, and a disadvantage can be easily avoided in that the charge-discharge capacity maintaining ratio is lowered when the secondary battery is charged or discharged at a high current density.

### <In the case where the cyclic carbonate having a fluorine atom is used as a non-aqueous solvent>

In the present invention, as mentioned above, the cyclic carbonate having no fluorine atom can be used as a non-aqueous solvent, while the cyclic carbonate having a fluorine atom can also be used as a non-aqueous solvent. In this case, as a non-aqueous solvent other than the cyclic carbonate having a fluorine atom, one of the above-exemplified non-aqueous solvents may be used in combination with the cyclic carbonate having a fluorine atom, and two or more types of the above-exemplified non-aqueous solvents may be used in combination with the cyclic carbonate having a fluorine atom.

For example, as a preferred combination of the non-aqueous solvents, there can be mentioned a combination of mainly a cyclic carbonate having a fluorine atom and a linear carbonate. Especially, an advantageous combination is such that the proportion of the total of the cyclic carbonate having a fluorine atom and the linear carbonate to the whole non-aqueous solvent is preferably 60% by volume or more, more preferably 80% by volume or more, further preferably 90% by volume or more, and the proportion of the cyclic carbonate having a fluorine atom to the total of the cyclic carbonate having a fluorine atom and the linear carbonate is 3% by volume or more, preferably 5% by volume or more, more preferably 10% by volume or more, further preferably 15% by volume or more, and is preferably 60% by volume or less, more preferably 50% by volume or less, further preferably 40% by volume or less, especially preferably 35% by volume or less.

When the above combination of the non-aqueous solvents is used, a non-aqueous electrolyte secondary battery produced using the combination of the non-aqueous solvents is likely to have excellent balance between the cycle characteristics and the high-temperature storage characteristics (particularly, residual capacity and high-load discharge capacity after stored at a high temperature).

Specific examples of preferred combinations of a cyclic carbonate having a fluorine atom and a linear carbonate include a combination of monofluoroethylene carbonate and dimethyl carbonate, a combination of monofluoroethylene carbonate and diethyl carbonate, a combination of monofluoroethylene carbonate and ethylmethyl carbonate, a combination of monofluoroethylene carbonate, dimethyl carbonate, and diethyl carbonate, a combination of monofluoroethylene carbonate, dimethyl carbonate, and ethylmethyl carbonate, a combination of monofluoroethylene carbonate, diethyl carbonate, and ethylmethyl carbonate, and a combination of monofluoroethylene carbonate, dimethyl carbonate, diethyl carbonate, and ethylmethyl carbonate.

Among the combinations of a cyclic carbonate having a fluorine atom and a linear carbonate, further preferred are those containing a symmetric linear alkyl carbonate as a linear carbonate, especially preferred are those containing monofluoroethylene carbonate, a symmetric linear carbonate, and an asymmetric linear carbonate, such as a combination of monofluoroethylene carbonate, dimethyl carbonate, and ethylmethyl carbonate, a combination of monofluoroethylene carbonate, diethyl carbonate, and ethylmethyl carbonate, and a combination of monofluoroethylene carbonate, dimethyl carbonate, diethyl carbonate, and ethylmethyl carbonate, because excellent balance between the cycle characteristics and the large-current discharge characteristics can be achieved. In these combinations, the symmetric linear carbonate is preferably dimethyl carbonate, and the alkyl group of the linear carbonate preferably has 1 to 2 carbon atoms.

As a preferred combination, there can be mentioned a combination such that a cyclic carbonate having no fluorine atom is further combined with the above-mentioned combination of a cyclic carbonate having a fluorine atom and a linear carbonate. Especially, an advantageous combination is such that the proportion of the total of the cyclic carbonate having a fluorine atom and the cyclic carbonate having no fluorine atom to the whole non-aqueous solvent is preferably 10% by volume or more, more preferably 15% by volume or more, further preferably 20% by volume or more, and the proportion of the cyclic carbonate having a fluorine atom to the total of the cyclic carbonate having a fluorine atom and the cyclic carbonate having no fluorine atom is 5% by volume or more, preferably 10% by volume or more, more preferably 15% by volume or more, further preferably 25% by volume or more, and is preferably 95% by volume or less, more preferably 85% by volume or less, further preferably 75% by volume or less, especially preferably 60% by volume or less.

When the cyclic carbonate having no fluorine atom is contained with a concentration in the above range, a stable protective film can be formed on the negative electrode while maintaining the electrical conductivity of the non-aqueous electrolytic solution.

Specific examples of preferred combinations of a cyclic carbonate having a fluorine atom, a cyclic carbonate having no fluorine atom, and a linear carbonate include a combination of monofluoroethylene carbonate, ethylene carbonate, and dimethyl carbonate, a combination of monofluoroethylene carbonate, ethylene carbonate, and diethyl carbonate, a combination of monofluoroethylene carbonate, ethylene carbonate, and ethylmethyl carbonate, a combination of monofluoroethylene carbonate, ethylene carbonate, dimethyl carbonate, and diethyl carbonate, a combination of monofluoroethylene carbonate, ethylene carbonate, dimethyl carbonate, and ethylmethyl carbonate, a combination of monofluoroethylene carbonate, ethylene carbonate, diethyl carbonate, and ethylmethyl carbonate, a combination of monofluoroethylene carbonate, ethylene carbonate, dimethyl carbonate, diethyl carbonate, and ethylmethyl carbonate, a combination of monofluoroethylene carbonate, propylene carbonate, and dimethyl carbonate, a combination of monofluoroethylene carbonate, propylene carbonate, and diethyl carbonate, a combination of monofluoroethylene carbonate, propylene carbonate, and ethylmethyl carbonate, a combination of monofluoroethylene carbonate, propylene carbonate, dimethyl carbonate, and diethyl carbonate, a combination of monofluoroethylene carbonate, propylene carbonate, dimethyl carbonate, and ethylmethyl carbonate, a combination of monofluoroethylene carbonate, propylene carbonate, diethyl carbonate, and ethylmethyl carbonate, a combination of monofluoroethylene carbonate, propylene carbonate, dimethyl carbonate, dimethyl carbonate, and ethylmethyl carbonate, a combination of monofluoroethylene carbonate, ethylene carbonate, propylene carbonate, and dimethyl carbonate, a combination of monofluoroethylene carbonate, ethylene carbonate, propylene carbonate, and diethyl carbonate, a combination of monofluoroethylene carbonate, ethylene carbonate, propylene carbonate, and ethylmethyl carbonate, a combination of monofluoroethylene carbonate, ethylene carbonate, propylene carbonate, dimethyl carbonate, and diethyl carbonate, a combination of monofluoroethylene carbonate, ethylene carbonate, propylene carbonate, dimethyl carbonate, and ethylmethyl carbonate, a combination of monofluoroethylene carbonate, ethylene carbonate, propylene carbonate, diethyl carbonate, and ethylmethyl carbonate, and a combination of monofluoroethylene carbonate, ethylene carbonate, propylene carbonate, dimethyl carbonate, diethyl carbonate, and ethylmethyl carbonate.

Among the combinations of a cyclic carbonate having a fluorine atom, a cyclic carbonate having no fluorine atom, and a linear carbonate, further preferred are those containing a symmetric linear alkyl carbonate as a linear carbonate, especially preferred are those containing monofluoroethylene carbonate, a symmetric linear carbonate, and an asymmetric linear carbonate, such as a combination of monofluoroethylene carbonate, ethylene carbonate, dimethyl carbonate, and ethylmethyl carbonate, a combination of monofluoroethylene carbonate, propylene carbonate, dimethyl carbonate, and ethylmethyl carbonate, a combination of monofluoroethylene carbonate, ethylene carbonate, propylene carbonate, dimethyl carbonate, and ethylmethyl carbonate, a combination of monofluoroethylene carbonate, ethylene carbonate, diethyl carbonate, and ethylmethyl carbonate, a combination of monofluoroethylene carbonate, propylene carbonate, diethyl carbonate, and ethylmethyl carbonate, a combination of monofluoroethylene carbonate, ethylene carbonate, propylene carbonate, diethyl carbonate, and ethylmethyl carbonate, a combination of monofluoroethylene carbonate, ethylene carbonate, dimethyl carbonate, diethyl carbonate, and ethylmethyl carbonate, a combination of monofluoroethylene carbonate, propylene carbonate, dimethyl carbonate, diethyl carbonate, and ethylmethyl carbonate, and a combination of monofluoroethylene carbonate, ethylene carbonate, propylene carbonate, dimethyl carbonate, diethyl carbonate, and ethylmethyl carbonate, because excellent balance between the cycle characteristics and the large-current discharge characteristics can be achieved. In these combinations, the symmetric linear carbonate is preferably dimethyl carbonate, and the alkyl group of the linear carbonate preferably has 1 to 2 carbon atoms.

In the case where dimethyl carbonate is contained as a non-aqueous solvent, when dimethyl carbonate is contained in a range such that the proportion of dimethyl carbonate to the whole non-aqueous solvent is preferably 10% by volume or more, more preferably 20% by volume or more, further preferably 25% by volume or more, especially preferably 30% by volume or more, and is preferably 90% by volume or less, more preferably 80% by volume or less, further preferably 75% by volume or less, especially preferably 70% by volume or less, the load characteristics of the non-aqueous electrolyte secondary battery are likely to be improved.

In the combination of mainly a cyclic carbonate having a fluorine atom and a linear carbonate, solvents other than the cyclic carbonate having no fluorine atom, such as a cyclic carboxylate, a linear carboxylate, a cyclic ether, a linear ether, a sulfur-containing organic solvent, a phosphorus-containing organic solvent, and a fluorine-containing aromatic solvent, may be mixed.

### <In the case where the cyclic carbonate having a fluorine atom is used as an auxiliary>

As mentioned below, in the non-aqueous electrolytic solution of the present invention, an auxiliary can be added. When the cyclic carbonate having a fluorine atom is used as an auxiliary, as a non-aqueous solvent other than the cyclic carbonate having a fluorine atom, the above-exemplified non-aqueous solvents may be used individually, or two or more types of the above-exemplified non-aqueous solvents may be used in an arbitrary combination and in an arbitrary ratio.

For example, as a preferred combination of the non-aqueous solvents, there can be mentioned a combination of mainly a cyclic carbonate having no fluorine atom and a linear carbonate.

Especially, an advantageous combination is such that the proportion of the total of the cyclic carbonate having no fluorine atom and the linear carbonate to the whole non-aqueous solvent is preferably 70% by volume or more, more preferably 80% by volume or more, further preferably 90% by volume or more, and the proportion of the cyclic carbonate having no fluorine atom to the total of the cyclic carbonate and the linear carbonate is preferably 5% by volume or more, more preferably 10% by volume or more, further preferably 15% by volume or more, and is preferably 50% by volume or less, more preferably 35% by volume or less, further preferably 30% by volume or less, especially preferably 25% by volume or less.

When the above combination of the non-aqueous solvents is used, a non-aqueous electrolyte secondary battery produced using the combination of the non-aqueous solvents is likely to have excellent balance between the cycle characteristics and the high-temperature storage characteristics (particularly, residual capacity and high-load discharge capacity after stored at a high temperature).

Specific examples of preferred combinations of a cyclic carbonate having no fluorine atom and a linear carbonate include a combination of ethylene carbonate and dimethyl carbonate, a combination of ethylene carbonate and diethyl carbonate, a combination of ethylene carbonate and ethylmethyl carbonate, a combination of ethylene carbonate, dimethyl carbonate, and diethyl carbonate, a combination of ethylene carbonate, dimethyl carbonate, and ethylmethyl carbonate, a combination of ethylene carbonate, diethyl carbonate, and ethylmethyl carbonate, and a combination of ethylene carbonate, dimethyl carbonate, diethyl carbonate, and ethylmethyl carbonate.

Among the combinations of a cyclic carbonate having no fluorine atom and a linear carbonate, further preferred are those containing an asymmetric linear alkyl carbonate as a linear carbonate, especially preferred are those containing ethylene carbonate, a symmetric linear carbonate, and an asymmetric linear carbonate, such as a combination of ethylene carbonate, dimethyl carbonate, and ethylmethyl carbonate, a combination of ethylene carbonate, diethyl carbonate, and ethylmethyl carbonate, and a combination of ethylene carbonate, dimethyl carbonate, diethyl carbonate, and ethylmethyl carbonate, because excellent balance between the cycle characteristics and the large-current discharge characteristics can be achieved.

In these combinations, the asymmetric linear carbonate is preferably ethylmethyl carbonate, and the alkyl group of the linear carbonate preferably has 1 to 2 carbon atoms.

As a preferred combination, there can be mentioned a combination such that propylene carbonate is further combined with the above-mentioned combination of ethylene carbonate and a linear carbonate.

When propylene carbonate is contained, the volume ratio of the ethylene carbonate and the propylene carbonate is preferably 99:1 to 40:60, especially preferably 95:5 to 50:50. Further, the proportion of propylene carbonate to the whole non-aqueous solvent is preferably 0.1% by volume or more, more preferably 1% by volume or more, further preferably 2% by volume or more, and is preferably 20% by volume or less, more preferably 8% by volume or less, further preferably 5% by volume or less.

When propylene carbonate is contained with a concentration in the above range, further excellent low-temperature characteristics can be advantageously achieved while maintaining the properties obtained from the combination of ethylene carbonate and a linear carbonate.

In the case where dimethyl carbonate is contained as a non-aqueous solvent, when dimethyl carbonate is contained in a range such that the proportion of dimethyl carbonate to the whole non-aqueous solvent is preferably 10% by volume or more, more preferably 20% by volume or more, further preferably 25% by volume or more, especially preferably 30% by volume or more, and is preferably 90% by volume or less, more preferably 80% by volume or less, further preferably 75% by volume or less, especially preferably 70% by volume or less, the load characteristics of the non-aqueous electrolyte secondary battery are likely to be improved.

In the combination of mainly a cyclic carbonate having no fluorine atom and a linear carbonate, other solvents, such as a cyclic carboxylate, a linear carboxylate, a cyclic ether, a linear ether, a sulfur-containing organic solvent, a phosphorus-containing organic solvent, and a fluorine-containing aromatic solvent, may be mixed.

### <Regarding the volume of a non-aqueous solvent>

In the present specification, with respect to the volume of a non-aqueous solvent, a value of volume measured at 25°C is used. However, with respect to a material which is in a solid state at 25°C, such as ethylene carbonate, a value of volume measured at the melting temperature of the material is used.

### [1-4. Auxiliary]

In the non-aqueous electrolytic solution of the present invention, an auxiliary may be appropriately used according to the purpose. Examples of auxiliaries include the below-shown compound which is reduced on a negative electrode during the first charging of a battery, overcharge preventing agent, and other auxiliaries.

The compound which is reduced on a negative electrode is reduced to form a film on the negative electrode, and this is preferred in view of stably protecting the negative electrode-electrolytic solution interface. Examples of such compounds include a cyclic carbonate having a carbon-carbon unsaturated bond, a cyclic carbonate having a fluorine atom, an unsaturated cyclic carbonate having a fluorine atom (hereinafter, frequently referred to as "fluorinated unsaturated cyclic carbonate"), a carboxylic anhydride, and an ate complex compound.

### <Cyclic carbonate having a carbon-carbon unsaturated bond>

With respect to the cyclic carbonate having a carbon-carbon unsaturated bond (hereinafter, frequently referred to as "unsaturated cyclic carbonate"), there is no particular limitation as long as it is a cyclic carbonate having a carbon-carbon double bond or a carbon-carbon triple bond, and an arbitrary unsaturated carbonate can be used. A cyclic carbonate having an aromatic ring is encompassed in the unsaturated cyclic carbonate.

Examples of unsaturated cyclic carbonates include vinylene carbonates, ethylene carbonates substituted with a substituent having an aromatic ring, a carbon-carbon double bond, or a carbon-carbon triple bond, phenyl carbonates, vinyl carbonates, allyl carbonates, and catechol carbonates.

Examples of vinylene carbonates include vinylene carbonate, methylvinylene carbonate, 4,5-dimethylvinylene carbonate, phenylvinylene carbonate, 4,5-diphenylvinylene carbonate, vinylvinylene carbonate, 4,5-divinylvinylene carbonate, allylvinylene carbonate, and 4,5-diallylvinylene carbonate.

Specific examples of ethylene carbonates substituted with a substituent having an aromatic ring, a carbon-carbon double bond, or a carbon-carbon triple bond include vinylethylene carbonate, 4,5-divinylethylene carbonate, 4-methyl-5-vinylethylene carbonate, 4-allyl-5-vinylethylene carbonate, ethynylethylene carbonate, 4,5-diethynylethylene carbonate, 4-methyl-5-ethynylethylene carbonate, 4-vinyl-5-ethynylethylene carbonate, 4-allyl-5-ethynylethytene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, and 4-methyl-5-allylethylene carbonate.

Of these, preferred examples of unsaturated cyclic carbonates include vinylene carbonate, methylvinylene carbonate, 4,5-dimethylvinylene carbonate, vinylvinylene carbonate, 4,5-vinylvinylene carbonate, allylvinylene carbonate, 4,5-diallylvinylene carbonate, vinylethylene carbonate, 4,5-divinylethylene carbonate, 4-methyl-5-vinylethylene carbonate, allylethylene carbonate, 4,5-diallylethylene carbonate, 4-methyl-5-allylethylene carbonate, 4-allyl-5-vinylethylene carbonate, ethynylethylene carbonate, 4,5-diethynylethylene carbonate, 4-methyl-5-ethynylethylene carbonate, and 4-vinyl-5-ethynylethylene carbonate.

Vinylene carbonate, vinylethylene carbonate, and ethynylethylene carbonate are especially preferred because these carbonates facilitate formation of a further stable interface protecting film.

With respect to the molecular weight of the unsaturated cyclic carbonate, there is no particular limitation, and the molecular weight is arbitrary as long as the effects of the present invention are not markedly sacrificed. The molecular weight of the unsaturated cyclic carbonate is preferably 80 to 250. When the molecular weight of the unsaturated cyclic carbonate is in the above range, it is likely that the unsaturated cyclic carbonate is surely dissolved in the non-aqueous electrolytic solution, so that the effects of the present invention are satisfactorily exhibited. The molecular weight of the unsaturated cyclic carbonate is more preferably 85 or more, and is more preferably 150 or less. With respect to the method for producing the unsaturated cyclic carbonate, there is no particular limitation, and the unsaturated cyclic carbonate can be produced by a known method appropriately selected.

The unsaturated cyclic carbonates may be used individually, or two or more types of the unsaturated cyclic carbonates may be used in an arbitrary combination and in an arbitrary ratio. With respect to the amount of the unsaturated cyclic carbonate incorporated, there is no particular limitation, and the amount is arbitrary as long as the effects of the present invention are not markedly sacrificed. The amount of the unsaturated cyclic carbonate incorporated is, based on the mass of the non-aqueous electrolytic solution (100% by mass), generally 0.001% by mass or more, preferably 0.01% by mass or more, more preferably 0.1% by mass or more, and is generally 10% by mass or less, preferably 5% by mass or less, more preferably 3% by mass or less. When the amount of the unsaturated cyclic carbonate incorporated is in the above range, the non-aqueous electrolyte secondary battery is likely to exhibit a satisfactory improvement effect for the cycle characteristics, and further a disadvantage can be easily avoided in that the high-temperature storage characteristics become so poor that the amount of the gas generated is increased to lower the discharge capacity maintaining ratio.

### <Cyclic carbonate having a fluorine atom>

Examples of the cyclic carbonates having a fluorine atom include fluorination products of cyclic carbonates having an alkylene group having 2 to 6 carbon atoms and derivatives thereof, such as a fluorination product of ethylene carbonate and derivatives thereof. Examples of derivatives of a fluorination product of ethylene carbonate include fluorination products of ethylene carbonate substituted with an alkyl group (for example, an alkyl group having 1 to 4 carbon atoms). Of these, preferred are ethylene carbonate having 1 to 8 fluorine atoms and derivatives thereof.

Specific examples of such carbonates include fluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethymene carbonate, 4,5-difluoro-4,5-dimethylethylene carbonate, and 4,4-difluoro-5,5-dimethylethylene carbonate.

Of these, at least one member selected from the group consisting of fluoroethylene carbonate, 4,4-difluoroethylene carbonate, and 4,5-difluoroethylene carbonate is more preferred from the viewpoint of imparting high ionic conductivity and advantageously forming an interface protecting film.

The cyclic carbonates having a fluorine atom may be used individually, or two or more types of the cyclic carbonates having a fluorine atom may be used in an arbitrary combination and in an arbitrary ratio.

The cyclic carbonates having a fluorine atom may be used individually, or two or more types of the cyclic carbonates having a fluorine atom may be used in an arbitrary combination and in an arbitrary ratio. The amount of the fluorinated cyclic carbonate incorporated into the non-aqueous electrolytic solution of the present invention is not limited, and is arbitrary as long as the effects of the present invention are not markedly sacrificed. The amount of the fluorinated cyclic carbonate incorporated is, based on the mass of the non-aqueous electrolytic solution (100% by mass), generally 0.001% by mass or more, preferably 0.01% by mass or more, more preferably 0.1% by mass or more, and is generally 10% by mass or less, preferably 5% by mass or less, more preferably 3% by mass or less.

### <Fluorinated unsaturated cyclic carbonate>

With respect to the number of fluorine atoms that the fluorinated unsaturated cyclic carbonate has, there is no particular limitation as long as the number of the fluorine atoms is 1 or more. Especially, the number of the fluorine atoms is generally 6 or less, preferably 4 or less, most preferably 1 or 2.

Examples of fluorinated unsaturated cyclic carbonates include fluorinated vinylene carbonate derivatives and fluorinated ethylene carbonate derivatives substituted with a substituent having an aromatic ring or a carbon-carbon double bond.

Examples of fluorinated vinylene carbonate derivatives include 4-fluorovinylene carbonate, 4-fluoro-5-methylvinylene carbonate, 4-fluoro-5-phenylvinylene carbonate, 4-allyl-5-fluorovinylene carbonate, and 4-fluoro-5 -vinylvinylene carbonate.

Examples of fluorinated ethylene carbonate derivatives substituted with a substituent having an aromatic ring or a carbon-carbon double bond include 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-4-vinylethylene carbonate, 4,4-difluoro-4-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate, 4,5-difluoro-4,5-diallylethylene carbonate, 4-fluoro-4-phenylethylene carbonate, 4-fluoro-5-phenylethylene carbonate, 4,4-difluoro-5-phenylethylene carbonate, and 4,5-difluoro-4-phenylethylene carbonate.

Of these, especially preferred examples of fluorinated unsaturated cyclic carbonates include 4-fluorovinylene carbonate, 4-fluoro-5-methylvinylene carbonate, 4-fluoro-5-vinylvinylene carbonate, 4-allyl-5-fluorovinylene carbonate, 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-4-vinylethylene carbonate, 4,4-difluoro-4-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate, and 4,5-difluoro-4,5-diallylethylene carbonate. These carbonates facilitate the formation of a stable interface protecting film and hence are more preferably used.

With respect to the molecular weight of the fluorinated unsaturated cyclic carbonate, there is no particular limitation, and the molecular weight is arbitrary as long as the effects of the present invention are not markedly sacrificed. The molecular weight of the fluorinated unsaturated cyclic carbonate is preferably 50 or more and 250 or less. When the molecular weight of the fluorinated unsaturated cyclic carbonate is in the above range, it is likely that the fluorinated unsaturated cyclic carbonate is surely dissolved in the non-aqueous electrolytic solution, so that the effects of the present invention are exhibited.

With respect to the method for producing the fluorinated unsaturated cyclic carbonate, there is no particular limitation, and the fluorinated unsaturated cyclic carbonate can be produced by a known method appropriately selected. The molecular weight of the fluorinated unsaturated cyclic carbonate is more preferably 100 or more, and is more preferably 200 or less.

The fluorinated unsaturated cyclic carbonates may be used individually, or two or more types of the fluorinated unsaturated cyclic carbonates may be used in an arbitrary combination and in an arbitrary ratio. With respect to the amount of the fluorinated unsaturated cyclic carbonate incorporated, there is no particular limitation, and the amount is arbitrary as long as the effects of the present invention are not markedly sacrificed.

The amount of the fluorinated unsaturated cyclic carbonate incorporated is, generally, based on the mass of the non-aqueous electrolytic solution (100% by mass), preferably 0.01 % by mass or more, more preferably 0.1 % by mass or more, further preferably 0.2% by mass or more, and is preferably 5% by mass or less, more preferably 4% by mass or less, further preferably 3% by mass or less.

When the amount of the fluorinated unsaturated cyclic carbonate incorporated is in the above range, the non-aqueous electrolyte secondary battery is likely to exhibit a satisfactory improvement effect for the cycle characteristics, and further a disadvantage can be easily avoided in that the high-temperature storage characteristics become so poor that the amount of the gas generated is increased to lower the discharge capacity maintaining ratio.

### <Carboxylic anhydride>

The amount of the carboxylic anhydride incorporated is, generally, based on the mass of the non-aqueous electrolytic solution (100% by mass), preferably 0.01% by mass or more, more preferably 0.1% by mass or more, further preferably 0.2% by mass or more, and is preferably 5% by mass or less, more preferably 4% by mass or less, further preferably 3% by mass or less.

When the amount of the carboxylic anhydride incorporated is in the above range, the non-aqueous electrolyte secondary battery is likely to exhibit a satisfactory improvement effect for the cycle characteristics, and further a disadvantage can be easily avoided in that the high-temperature storage characteristics become so poor that the amount of the gas generated is increased to lower the discharge capacity maintaining ratio.

Examples of such carboxylic anhydrides include succinic anhydride, maleic anhydride, and phthalic anhydride.

### <Ate complex compound>

The amount of the ate complex compound incorporated is, generally, based on the mass of the non-aqueous electrolytic solution (100% by mass), preferably 0.01% by mass or more, more preferably 0.1 % by mass or more, further preferably 0.2% by mass or more, and is preferably 5% by mass or less, more preferably 4% by mass or less, further preferably 3% by mass or less.

When the amount of the ate complex compound incorporated is in the above range, the non-aqueous electrolyte secondary battery is likely to exhibit a satisfactory improvement effect for the cycle characteristics, and further a disadvantage can be easily avoided in that the high-temperature storage characteristics become so poor that the amount of the gas generated is increased to lower the discharge capacity maintaining ratio.

Examples of such ate complex compounds include lithium difluorooxalatoborate, lithium bis(oxalato)borate, lithium tetrafluorooxalatophosphate, lithium difluorobis(oxalato)phosphate, and lithium tris(oxalato)phosphate.

Hereinabove, explanation was made on the compound which is reduced on a negative electrode during the first charging of a battery, and which can be used as an auxiliary in the non-aqueous electrolytic solution of the present invention. Among these compounds, from the viewpoint of stably protecting the negative electrode-electrolytic solution interface to suppress the occurrence of a side reaction, preferred are vinylene carbonate, vinylethylene carbonate, fluoroethylene carbonate, succinic anhydride, lithium bis(oxalato)borate, lithium tetrafluorooxalatophosphate, lithium difluorobis(oxalato)phosphate, and lithium tris(oxalato)phosphate, and more preferred are vinylene carbonate, fluoroethylene carbonate, and lithium bis(oxalato)borate.

### <Overcharge preventing agent>

In the non-aqueous electrolytic solution of the present invention, an overcharge preventing agent can be used for effectively preventing the non-aqueous electrolyte secondary battery, for example, in the state of being overcharged from collapsing or burning.

Examples of overcharge preventing agents include: aromatic compounds, such as biphenyl, an alkylbiphenyl, terphenyl, a partial hydrogenation product of terphenyl, cyclohexylbenzene, t-butylbenzene, t-amylbenzene, diphenyl ether, and dibenzofuran;
partial fluorination products of the above aromatic compounds, such as 2-fluorobiphenyl, o-cyclohexylfluorobenzene, and p-cyclohexylfluorobenzene; and
fluorine-containing anisole compounds, such as 2,4-difluoroanisole, 2,5-difluoroanisole, 2,6-difluoroanisole, and 3,5-difluoroanisole.

Of these, preferred are aromatic compounds, such as biphenyl, an alkylbiphenyl, terphenyl, a partial hydrogenation product of terphenyl, cyclohexylbenzene, t-butylbenzene, t-amylbenzene, diphenyl ether, and dibenzofuran.

These aromatic compounds may be used individually or in combination. When two or more of the aromatic compounds are used in combination, preferred are, particularly, a combination of cyclohexylbenzene and t-butylbenzene or t-amylbenzene, and a combination of at least one member selected from aromatic compounds containing no oxygen, such as biphenyl, an alkylbiphenyl, terphenyl, a partial hydrogenation product of terphenyl, cyclohexylbenzene, t-butylbenzene, and t-amylbenzene, and at least one member selected from oxygen-containing aromatic compounds, such as diphenyl ether and dibenzofuran from the viewpoint of the balance between the overcharge preventing properties and the high-temperature storage characteristics.

With respect to the amount of the overcharge preventing agent incorporated, there is no particular limitation, and the amount is arbitrary as long as the effects of the present invention are not markedly sacrificed. The overcharge preventing agent is preferably incorporated in an amount of 0.1% by mass or more and 5% by mass or less, based on the mass of the non-aqueous electrolytic solution (100% by mass). When the amount of the overcharge preventing agent incorporated is in the above range, the overcharge preventing agent is likely to satisfactorily exhibit its effect, and further a disadvantage can be easily avoided in that battery characteristics, such as high-temperature storage characteristics, become poor.

The overcharge preventing agent is incorporated more preferably in an amount of 0.2% by mass or more, further preferably 0.3% by mass or more, especially preferably 0.5% by mass or more, and more preferably in an amount of 3% by mass or less, further preferably 2% by mass or less.

### <Other auxiliaries>

In the non-aqueous electrolytic solution of the present invention, known other auxiliaries can be used. Examples of other auxiliaries include:
carbonate compounds, such as erythritan carbonate, spiro-bis-dimethylene carbonate, and methoxyethyl-methyl carbonate;
carboxylic anhydrides, such as glutaric anhydride, citraconic anhydride, glutaconic anhydride, itaconic anhydride, diglycolic anhydride, cyclohexanedicarboxylic anhydride, cyclopentanetetracarboxylic dianhydride, and phenylsuccinic anhydride;
spiro compounds, such as 2,4,8,10-tetraoxaspiro[5.5]undecane and 3,9-divinyl-2,4,8,10-tetraoxaspiro[5.5]undecane;
sulfur-containing compounds, such as ethylene sulfite, methyl fluorosulfonate, ethyl fluorosulfonate, methyl methanesulfonate, ethyl methanesulfonate, busulfane, sulfolene, diphenyl sulfone, N,N-dimethylmethanesulfonamide, and N,N-diethylmethanesulfonamide;
nitrogen-containing compounds, such as 1-methyl-2-pyrrolidinone, 1-methyl-2-piperidone, 3-methyl-2-oxazolidinone, 1,3-dimethyl-2-imidazolidinone, and N-methylsuccinimide;
hydrocarbon compounds, such as heptane, octane, nonane, decane, and cycloheptane; and
fluorine-containing aromatic compounds, such as fluorobenzene, difluorobenzene, hexafluorobenzene, and benzotrifluoride. These auxiliaries may be used individually or in combination. By adding the above auxiliary, it is possible to improve the capacity maintaining properties and cycle characteristics of the non-aqueous electrolyte secondary battery after being stored at high temperatures.

With respect to the amount of the other auxiliary incorporated, there is no particular limitation, and the amount is arbitrary as long as the effects of the present invention are not markedly sacrificed. The amount of the other auxiliary incorporated is preferably 0.01% by mass or more and 5% by mass or less, based on the mass of the non-aqueous electrolytic solution (100% by mass). When the amount of the other auxiliary incorporated is in the above range, the other auxiliary is likely to satisfactorily exhibit its effect, and a disadvantage can be easily avoided in that battery characteristics, such as high-load discharge characteristics, become poor.

The amount of the other auxiliary incorporated is more preferably 0.1% by mass or more, further preferably 0.2% by mass or more, and is more preferably 3% by mass or less, further preferably 1% by mass or less.

The above-described non-aqueous electrolytic solution of the present invention includes a mode of a non-aqueous electrolytic solution which is present inside the below-described non-aqueous electrolyte secondary battery of the present invention.

Specifically, the non-aqueous electrolytic solution of the present invention includes a mode of a non-aqueous electrolytic solution present inside a non-aqueous electrolyte secondary battery which is obtained by separately synthesizing individual constituents of the non-aqueous electrolytic solution, such as a lithium salt, a solvent, and an auxiliary, and preparing a non-aqueous electrolytic solution from the substantially isolated constituents, and injecting the prepared non-aqueous electrolytic solution into a battery separately assembled by the method mentioned below, a mode of a non-aqueous electrolytic solution present inside a non-aqueous electrolyte secondary battery in which individual constituents of the non-aqueous electrolytic solution of the present invention are placed in the battery and mixed together in the battery so that the same composition as that of the non-aqueous electrolytic solution of the present invention is obtained inside the battery, and a mode of a non-aqueous electrolytic solution present inside a non-aqueous electrolyte secondary battery in which the compounds constituting the non-aqueous electrolytic solution of the present invention are caused to be generated in the non-aqueous electrolyte secondary battery so that the same composition as that of the non-aqueous electrolytic solution of the present invention is obtained inside the secondary battery.

### [2. Non-aqueous electrolyte secondary battery]

Hereinbelow, the non-aqueous electrolyte secondary battery of the present invention will be described. The secondary battery comprises a negative electrode capable of storing and releasing metal ions, a positive electrode capable of storing and releasing metal ions, and a non-aqueous electrolytic solution. These constituents are individually described below.

### [2-1. Non-aqueous electrolytic solution]

As the non-aqueous electrolytic solution, the above-described non-aqueous electrolytic solution of the present invention is used. In the non-aqueous electrolytic solution of the present invention, another non-aqueous electrolytic solution can be incorporated in such an amount that the non-aqueous electrolyte secondary battery of the present invention can be obtained.

### [2-2. Positive electrode]

The positive electrode active material (lithium-transition metal compound) used in the positive electrode is described below.

### <Lithium-transition metal compound>

The lithium-transition metal compound is a compound having a structure which can eliminate lithium ions therefrom and insert lithium ions thereinto, and examples of such compounds include sulfides, phosphate compounds, silicate compounds, borate compounds, and lithium-transition metal composite oxides.

As examples of the sulfides, there can be mentioned compounds having a two-dimensional layer structure, such as TiS₂ and MoS₂, and Chevrel compounds having a strong, three-dimensional skeletal structure and being represented by the general formula: MₓMo₆S₈ (wherein M is a transition metal, such as Pb, Ag, or Cu).

As examples of the phosphate compounds, there can be mentioned those of an olivine structure, and they are generally represented by LiₓMPO₄ (wherein M is at least one transition metal, and x satisfies the relationship: 0 < x ≤ 1.2).

As an example of the silicate compound, there can be mentioned LiMSiO₄. As an example of the borate compound, there can be mentioned LiMBO₄.

As examples of the lithium-transition metal composite oxides, there can be mentioned those of a spinel structure that enables three-dimensional diffusion, and those of a layer structure that enables two-dimensional diffusion of lithium ions. The oxides having a spinel structure are generally represented by LiM₂O₄ (wherein M is at least one transition metal), and specific examples of such oxides include LiMn₂O₄, LiCoMnO₄, LiNi_{0.5}Mn_{1.5}O₄, and LiCoVO₄. The oxides having a layer structure are generally represented by LiMO₂ (wherein M is at least one transition metal). Specific examples of such oxides include LiCoO₂, LiNiO₂, LiNi₁₋ₓCoₓO₂, LiNi_{1-x-y}CoₓMn_{y}O₂, LiNi_{0.5}Mn_{0.5}O₂, Li_{1.2}Cr_{0.4}Mn_{0.4}O₂, Li_{1.2}Cr_{0.4}Ti_{0.4}O₂, and LiMnO₂.

Among the above-mentioned oxides, preferred are layer transition metal oxides, spinel structure type oxides, and olivine structure type oxides from the viewpoint of achieving both a high energy density and a long life.

### <Composition>

Further, with respect to the lithium-transition metal compound, for example, there can be mentioned compounds represented by the following compositional formula (A) or (B).

Li₁₊ₓMO₂ (A) Li[LiₐM_{b}Mn_{2-b-a}]O_{4+δ} (B)

### 1) Lithium-transition metal compound represented by the compositional formula (A) above

In the compositional formula (A) above, x is generally 0 to 0.5. M is an element comprising Ni and Mn, or Ni, Mn, and Co, and the Mn/Ni molar ratio is generally 0.1 to 5. The Ni/M molar ratio is generally 0 to 0.5. The Co/M molar ratio is generally 0 to 0.5. The Li-rich moiety indicated by x is optionally replaced by transition metal site M.

In the compositional formula (A) above, the atomic ratio for the oxygen amount is shown to be 2 for convenience's sake, and may be nonstoichiometric to some extent. Further, in the above compositional formula, x indicates the composition of the material charged on the stage of production of the lithium-transition metal compound. Generally, the battery assembled is subjected to aging before put into the market. For this reason, the Li amount in the positive electrode may be reduced due to charging and discharging of the battery. In such a case, the result of the measurement by a compositional analysis may show that x is -0.65 to 1 when discharging is performed until the voltage becomes 3 V.

With respect to the lithium-transition metal compound, for improving the crystalline properties of the positive electrode active material, one which is calcined in an atmosphere of oxygen-containing gas at a high temperature exhibits excellent battery characteristics.

Further, the lithium-transition metal compound represented by the compositional formula (A) may be a solid solution with Li₂MO₃ called a 213 layer as shown in the following general formula (A').

αLi₂MO₃·(1-α)LiM'O₂ (A')

In the general formula above, α is a number which satisfies the relationship: 0 <α<1.

M is at least one metal element having an average oxidation number of 4⁺, specifically, at least one metal element selected from the group consisting of Mn, Zr, Ti, Ru, Re, and Pt.

M' is at least one metal element having an average oxidation number of 3⁺, preferably at least one metal element selected from the group consisting of V, Mn, Fe, Co, and Ni, more preferably at least one metal element selected from the group consisting of Mn, Co, and Ni.

### 2) Lithium-transition metal compound represented by the compositional formula (B) above

In the compositional formula (B) above, M is an element comprising at least one transition metal selected from Ni, Cr, Fe, Co, Cu, Zr, Al, and Mg.

### b value is generally 0.4 to 0.6.

When b value is in this range, the energy density of the lithium-transition metal compound per unit mass is high.

a value is generally 0 to 0.3. Further, in the above compositional formula, a indicates the composition of the material charged on the stage of production of the lithium-transition metal compound. Generally, the battery assembled is subjected to aging before put into the market. For this reason, the Li amount in the positive electrode may be reduced due to charging and discharging of the battery. In such a case, the result of the measurement by a compositional analysis may show that a is -0.65 to 1 when discharging is performed until the voltage becomes 3 V.

When a value is in the above range, the energy density of the lithium-transition metal compound per unit mass is not markedly sacrificed, and further excellent load characteristics can be achieved.

Further, δ value is generally in the range of from -0.5 to +0.5. When δ value is in the above range, the lithium-transition metal compound has high stability in respect of the crystal structure, and a non-aqueous electrolyte secondary battery having an electrode produced using such a lithium-transition metal compound has excellent cycle characteristics and excellent high-temperature storage properties.

With respect to a lithium-nickel-manganese composite oxide which is the lithium-transition metal compound, meanings of the lithium composition from a chemical point of view are described below in detail.

a and b in the above compositional formula of the lithium-transition metal compound are determined by analyzing the individual transition metals and lithium using an inductively coupled plasma emission spectrometry analyzer (ICP-AES) and determining a Li/Ni/Mn ratio.

From a structural point of view, lithium for a is considered to be replaced by the same transition metal site. On the principle that the charge is neutral, lithium for a causes an average valence of M and manganese to be larger than 3.5-valence.

Further, the lithium-transition metal compound may be substituted with fluorine, and the lithium-transition metal compound in such a case is represented by LiMn₂O₄₋ₓF₂ₓ.

Specific examples of lithium-transition metal compounds having the above composition include Li₁₊ₓNi_{0.5}Mn_{0.5}O₂, Li₁₊ₓNi_{0.85}Co_{0.10}Al_{0.05}O₂, Li₁₊ₓNi_{0.33}Mn_{0.33}Co_{0.33}O₂, Li₁₊ₓNi_{0.45}Mn_{0.45}Co_{0.1}O₂, Li₁₊ₓMn_{1.8}Al_{0.2}O₄, and Li₁₊ₓMn_{1.5}Ni_{0.5}O₄. These lithium-transition metal compounds may be used individually or in combination.

### <Introduction of a hetero-element>

A hetero-element may be introduced into the lithium-transition metal compound. The hetero-element is at least one member selected from B, Na, Mg, Al, K, Ca, Ti, V, Cr, Fe, Cu, Zn, Sr, Y, Zr, Nb, Ru, Rh, Pd, Ag, In, Sb, Te, Ba, Ta, Mo, W, Re, Os, Ir, Pt, Au, Pb, La, Ce, Pr, Nd, Sm, Eu, Gd, Tb, Dy, Ho, Er, Tm, Yb, Lu, Bi, N, F, S, Cl, Br, I, As, Ge, P, Pb, Sb, Si, and Sn.

The hetero-element may be incorporated into the crystal structure of the lithium-transition metal compound, or is not incorporated into the crystal structure of the lithium-transition metal compound but may be unevenly present on the surface of the particles of the compound or on the grain boundary in the form of a simple substance or a compound.

### <Surface coating>

The positive electrode active material having deposited on the surface thereof a substance having a composition different from that of the substance constituting the positive electrode active material may be used. Examples of the surface deposition substances include oxides, such as aluminum oxide, silicon oxide, titanium oxide, zirconium oxide, magnesium oxide, calcium oxide, boron oxide, antimony oxide, and bismuth oxide; sulfates, such as lithium sulfate, sodium sulfate, potassium sulfate, magnesium sulfate, calcium sulfate, and aluminum sulfate; carbonates, such as lithium carbonate, calcium carbonate, and magnesium carbonate; and carbon.

The surface deposition substance can be deposited on the surface of the positive electrode active material by, for example, a method in which a surface deposition substance is dissolved or suspended in a solvent and the positive electrode active material is impregnated with the resultant solution or suspension, followed by drying, a method in which a surface deposition substance precursor is dissolved or suspended in a solvent and the positive electrode active material is impregnated with the resultant solution or suspension, followed by a reaction caused by, e.g., heating, or a methods in which a surface deposition substance is added to a positive electrode active material precursor whereupon the resultant mixture is calcined. When carbon is deposited, a method can be used in which a carbonaceous material, for example, in the form of activated carbon is mechanically deposited later.

With respect to the amount of the surface deposition substance used, based on the mass of the positive electrode active material, the lower limit is preferably 0.1 ppm, more preferably 1 ppm, further preferably 10 ppm, and the upper limit is preferably 20%, more preferably 10%, further preferably 5%. The surface deposition substance can prevent the electrolytic solution from suffering an oxidation reaction on the surface of the positive electrode active material, improving the battery life. When the amount of the substance deposited is in the above range, the resistance caused due to the inhibition of lithium ions from going into or out of the active material can be suppressed, and further the above effect can be satisfactorily exhibited.

In the present invention, the positive electrode active material having deposited on the surface thereof a substance having a composition different from that of the substance constituting the positive electrode active material is involved in the "positive electrode active material".

### <Shape>

As examples of shapes of the particles of positive electrode active material, there can be mentioned a bulk shape, a polyhedral shape, a spherical shape, an ellipsoidal shape, a plate shape, a needle-like shape, and a cylindrical shape, which are conventionally used, and, of these, preferred are the particles of which primary particles undergo aggregation to form secondary particles wherein the shape of the formed secondary particles is a spherical shape or an ellipsoidal shape. Generally, in an electrochemical element, the active material in the electrode suffers expansion or shrinkage during the charging and discharging of the element, and therefore, the resultant stress is likely to cause deterioration, such as a breakage of the active material or cutting of the conductive path. Therefore, rather than the active material in the form of individual particles of primary particles, the active material in a form such that primary particles of the active material undergo aggregation to form secondary particles is preferred because it can relax a stress due to the expansion or shrinkage to prevent deterioration. Further, rather than the active material in the form of particles which undergo orientation along the axis, for example, which are of a plate shape, the active material in the form of particles of a spherical shape or an ellipsoidal shape is preferred because orientation of the particles is unlikely to occur upon forming the electrode, and hence the electrode is unlikely to suffer expansion or shrinkage during the charging and discharging, and further, when preparing the electrode, the particles and a conductor can be easily uniformly mixed with each other.

### <Tap density>

The tap density of the positive electrode active material is preferably 0.5 g/cm³ or more, more preferably 1.0 g/cm³ or more, further preferably 1.5 g/cm³ or more, most preferably 1.7 g/cm³ or more. When the tap density of the positive electrode active material is in the above range, the amount of the dispersing medium required for forming the positive electrode active material layer and the amounts of the conductor and binder required can be suppressed, so that the filling ratio of the positive electrode active material and the battery capacity can be secured. By using the positive electrode active material having a high tap density, a positive electrode active material layer having a high density can be formed. The tap density is generally preferably larger, and the tap density has no particular upper limit. However, the upper limit of the tap density is preferably 2.8 g/cm³, more preferably 2.7 g/cm³, further preferably 2.5 g/cm³. When the tap density is in the above range, deterioration of the load characteristics can be suppressed.

In the present invention, a tap density is measured by placing 5 to 10 g of a positive electrode active material powder in a 10 ml measuring cylinder made of glass, and subjecting the placed powder to 200-time tapping with a stroke length of about 20 mm to determine a powder filling density (tap density) g/cc.

### <Median diameter d50>

The median diameter d50 of the positive electrode active material particles (secondary particle diameter when the primary particles of the positive electrode active material undergo aggregation to form secondary particles) is preferably 0.3 µm or more, more preferably 1.2 µm or more, further preferably 1.5 µm or more, most preferably 2 µm or more, and the upper limit of the median diameter d50 is preferably 20 µm, more preferably 18 µm, further preferably 16 µm, most preferably 15 µm. When the median diameter d50 of the positive electrode active material particles is in the above range, a positive electrode active material having a high tap density can be obtained, so that deterioration of the battery performance can be suppressed. Further, a problem can be prevented in that, for example, when preparing a positive electrode for non-aqueous electrolyte secondary battery, that is, when forming a slurry of the active material, conductor, binder and others in a solvent and applying the slurry to form a thin film, a streak line is caused. When two types or more of the positive electrode active materials having different median diameters d50 are mixed together, the filling properties of the active material particles upon preparing a positive electrode can be further improved.

In the present invention, the median diameter d50 of the positive electrode active material is measured using a known laser diffraction/scattering-type particle size distribution measurement apparatus. When LA-920, manufactured by HORIBA, Ltd., is used as a particle size distribution meter, a 0.1% by mass aqueous solution of sodium hexametaphosphate is used as a dispersing medium for the measurement, and, after the dispersion of the positive electrode active material is subjected to ultrasonic dispersion for 5 minutes and then the refractive index for measurement is set at 1.24, the measurement is conducted.

### <Average primary particle diameter>

When the primary particles of the positive electrode active material undergo aggregation to form secondary particles, the average primary particle diameter of the positive electrode active material is preferably 0.05 µm or more, more preferably 0.1 µm or more, further preferably 0.2 µm or more, and the upper limit of the average primary particle diameter is preferably 2 µm, more preferably 1.6 µm, further preferably 1.3 µm, most preferably 1 µm. When the average primary particle diameter of the positive electrode active material is in the above range, the powder filling properties and specific surface area of the positive electrode active material can be secured, so that deterioration of the battery performance can be suppressed, and, meanwhile, appropriate crystalline properties can be obtained to secure the reversibility of charging and discharging.

In the present invention, the average primary particle diameter of the positive electrode active material is measured by observation using a scanning electron microscope (SEM). Specifically, in a photomicrograph taken at a magnification of 10,000 times, with respect to 50 arbitrary primary particles, a value of the longest section of a horizontal line defined by the boundaries of the primary particle on the both sides is determined, and an average of the obtained values is determined as an average primary particle diameter.

### <Average secondary particle diameter>

Further, the average secondary particle diameter of the positive electrode active material is also arbitrary as long as the effects of the present invention are not markedly sacrificed, but is generally 0.2 µm or more, preferably 0.3 µm or more, and is generally 20 µm or less, preferably 10 µm or less. When the average secondary particle diameter is too small, it is likely that deterioration of the non-aqueous electrolyte secondary battery due to cycles is marked or handling of the positive electrode active material is difficult. When the average secondary particle diameter is too large, the internal resistance of the battery is likely to be increased, making it difficult to achieve output.

### <BET Specific surface area>

The BET specific surface area of the positive electrode active material is preferably 0.3 m²/g or more, more preferably 0.4 m²/g or more, further preferably 0.5 m²/g or more, most preferably 0.6 m²/g or more, and the upper limit of the BET specific surface area is generally 50 m²/g, preferably 40 m²/g, further preferably 30 m²/g. When the BET specific surface area of the positive electrode active material is in the above range, the battery performance can be secured, and further excellent application properties of the positive electrode active material can be maintained.

In the present invention, the BET specific surface area is defined by a value which is measured using a surface area meter (for example, Fully-automatic surface area measurement apparatus, manufactured by Ohkura Riken Inc.) by subjecting a sample to predrying under a nitrogen gas flow at 150°C for 30 minutes, and then making a measurement in accordance with a nitrogen adsorption BET single-point method by a gas flow method using a nitrogen-helium mixed gas accurately prepared so that the nitrogen pressure relative to atmospheric pressure becomes 0.3.

### <Method for producing the positive electrode active material>

With respect to the method for producing the positive electrode active material, there is no particular limitation as long as the non-aqueous electrolyte secondary battery of the present invention can be obtained, and several methods can be mentioned, and a general method for producing an inorganic compound is used.

Particularly, as a method for producing an active material of a spherical shape or an ellipsoidal shape, various methods can be considered. As an example, there can be mentioned a method in which a transition metal raw material, such as a transition metal nitrate or sulfate, and, if necessary, other element raw materials are dissolved in or pulverized and dispersed in a solvent, such as water, and the pH of the resultant solution or dispersion is controlled while stirring to form a spherical precursor, and the formed spherical precursor is recovered, and dried if necessary, and then a Li source, such as LiOH, Li₂CO₃, or LiNO₃, is added to the precursor, followed by calcination at a high temperature, to obtain an active material.

As an alternative method, there can be mentioned a method in which a transition metal raw material, such as a transition metal nitrate, sulfate, hydroxide, or oxide, and, if necessary, other element raw materials are dissolved in or pulverized and dispersed in a solvent, such as water, and the resultant solution or dispersion is shaped by drying using, e.g., a spray dryer to form a precursor of a spherical shape or an ellipsoidal shape, and a Li source, such as LiOH, Li₂CO₃, or LiNO₃, is added to the precursor, followed by calcination at a high temperature, to obtain an active material.

As a further alternative method, there can be mentioned a method in which a transition metal raw material, such as a transition metal nitrate, sulfate, hydroxide, or oxide, a Li source, such as LiOH, Li₂CO₃, or LiNO₃, and, if necessary, other element raw materials are dissolved in or pulverized and dispersed in a solvent, such as water, and the resultant solution or dispersion is shaped by drying using, e.g., a spray dryer to form a precursor of a spherical shape or an ellipsoidal shape, and the precursor is subjected to calcination at a high temperature to obtain an active material.

### <Blend>

These positive electrode active materials may be used individually, or two or more types of the positive electrode active materials may be used in an arbitrary combination and in an arbitrary ratio.

### <Construction of and preparation method for a positive electrode>

The construction of the positive electrode is described below. In the present invention, the positive electrode can be prepared by forming a positive electrode active material layer containing a positive electrode active material and a binder on a current collector. Production of the positive electrode using a positive electrode active material can be performed by a general method. Specifically, the positive electrode can be obtained by mixing together a positive electrode active material and a binder and, if necessary, for example, a conductor and a thickening agent by a dry process and forming the resultant mixture into a sheet form and bonding the sheet onto a current collector for positive electrode by pressing, or by dissolving or dispersing the above materials in a liquid medium to form a slurry, and applying the slurry to a current collector for positive electrode, and drying the applied slurry to form a positive electrode active material layer on the current collector. Alternatively, for example, the above-mentioned positive electrode active material may be formed by rolling into an electrode in the form of a sheet, or formed by compression molding into an electrode in the form of pellets. An explanation is made below on the case where a slurry is applied to a current collector for positive electrode and dried.

### <Content of the active material>

The content of the positive electrode active material in the positive electrode active material layer is preferably 80% by mass or more, more preferably 82% by mass or more, especially preferably 84% by mass or more. Further, the upper limit of the content is preferably 98% by mass, more preferably 95% by mass, especially preferably 93% by mass. When the content of the positive electrode active material in the positive electrode active material layer is in the above range, the electrical capacity of the positive electrode active material in the positive electrode active material layer can be secured, and further the strength of the positive electrode can be maintained.

For increasing the filling density of the positive electrode active material, the positive electrode active material layer obtained by applying the slurry onto a current collector and drying the slurry is preferably pressed and increased in density by means of, for example, a handpress or a roller press. The lower limit of the density of the positive electrode active material layer is preferably 1.5 g/cm³, more preferably 2 g/cm³, further preferably 2.2 g/cm³, and the upper limit of the density is preferably 3.8 g/cm³, more preferably 3.5 g/cm³, further preferably 3.0 g/cm³, especially preferably 2.8 g/cm³. When the density of the positive electrode active material layer is larger than the above range, penetration of the electrolytic solution to around the current collector/active material interface is likely to be poor, and particularly, the charge-discharge characteristics at a high current density are likely to become poor, so that a high output cannot be obtained. On the other hand, when the density of the positive electrode active material layer is smaller than the above range, the conductivity between the active materials is likely to be lowered to increase the battery resistance, so that a high output cannot be obtained.

### <Conductor>

As the conductor, a known conductor can be arbitrarily used. Specific examples of conductors include metal materials, such as copper and nickel; graphite, such as natural graphite and artificial graphite; carbon black, such as acetylene black; and carbonaceous materials, e.g., amorphous carbon, such as needle coke. These conductors may be used individually, or two or more types of the conductors may be used in an arbitrary combination and in an arbitrary ratio.

The content of the conductor in the positive electrode active material layer is generally 0.01 % by mass or more, preferably 0.1 % by mass or more, more preferably 1% by mass or more, and the upper limit of the content of the conductor is generally 50% by mass, preferably 30% by mass, more preferably 15% by mass. When the content of the conductor in the positive electrode active material layer is in the above range, satisfactory conductivity and battery capacity can be secured.

### <Binder>

With respect to the binder used for producing the positive electrode active material layer, there is no particular limitation. When using an application method, the type of the binder is not particularly limited as long as it is a material capable of being dissolved or dispersed in a liquid medium used for producing an electrode. However, the binder is preferably selected taking into consideration, for example, a weathering resistance, a chemical resistance, a heat resistance, and flame retardancy. Specific examples of binders include inorganic compounds, such as a silicate and water glass; alkane polymers, such as polyethylene, polypropylene, and poly-1,1-dimethylethylene; unsaturated polymers, such as polybutadiene and polyisoprene; polymers having a ring, such as polystyrene, polymethylstyrene, polyvinylpyridine, and poly-N-vinylpyrrolidone; acrylic derivative polymers, such as polymethyl methacrylate, polyethyl methacrylate, polybutyl methacrylate, polymethyl acrylate, polyethyl acrylate, polyacrylic acid, polymethacrylic acid, and polyacrylamide; fluororesins, such as polyvinyl fluoride, polyvinylidene fluoride, and polytetrafluoroethylene; CN group-containing polymers, such as polyacrylonitrile and polyvinylidene cyanide; polyvinyl alcohol polymers, such as polyvinyl acetate and polyvinyl alcohol; halogen-containing polymers, such as polyvinyl chloride and polyvinylidene chloride; and conductive polymers, such as polyaniline.

A mixture, a modification product, and a derivative of the above-mentioned polymers and, for example, a random copolymer, an alternating copolymer, a graft copolymer, and a block copolymer of various monomers constituting the above-mentioned polymers can be used. Among these, preferred binders are a fluororesin and a CN group-containing polymer. The binders may be used individually, or two or more types of the binders may be used in an arbitrary combination and in an arbitrary ratio.

When the above-mentioned polymer or resin is used as a binder, the mass average molecular weight of the polymer or resin is arbitrary as long as the effects of the present invention are not markedly sacrificed, but the molecular weight is generally 10,000 or more, preferably 100,000 or more, and is generally 3,000,000 or less, preferably 1,000,000 or less. When the molecular weight of the polymer or resin is too low, the resultant electrode tends to be lowered in strength. On the other hand, when the molecular weight of the polymer or resin is too high, the viscosity is likely to be increased, making it difficult to form an electrode.

These materials may be used individually, or two or more types of the materials may be used in an arbitrary combination and in an arbitrary ratio.

The content of the binder in the positive electrode active material layer is generally 0.1% by mass or more, preferably 1% by mass or more, further preferably 3% by mass or more, and the upper limit of the content of the binder is generally 80% by mass, preferably 60% by mass, further preferably 40% by mass, most preferably 10% by mass. When the content of the binder in the positive electrode active material layer is in the above range, mechanical strength of the positive electrode can be secured, and further deterioration of battery performance, such as cycle characteristics, can be suppressed, and, meanwhile, a lowering of the battery capacity or conductivity can be suppressed.

### <Solvent for forming a slurry>

With respect to the type of the solvent used for forming a slurry, there is no particular limitation as long as it is a solvent capable of having dissolved or dispersed therein a positive electrode active material, a conductor, a binder, and a thickening agent used if necessary, and either an aqueous solvent or an organic solvent may be used. Examples of aqueous solvents include water, and a mixed solvent of an alcohol and water. Examples of organic solvents include aliphatic hydrocarbons, such as hexane; aromatic hydrocarbons, such as benzene, toluene, xylene, and methylnaphthalene; heterocyclic compounds, such as quinoline and pyridine; ketones, such as acetone, methyl ethyl ketone, and cyclohexanone; esters, such as methyl acetate and methyl acrylate; amines, such as diethylenetriamine and N,N-dimethylaminopropylamine; ethers, such as diethyl ether, propylene oxide, and tetrahydrofuran; amides, such as N-methylpyrrolidone, dimethylformamide, and dimethylactamide; and aprotic polar solvents, such as hexamethylphosphoramide and dimethyl sulfoxide.

### <Thickening agent>

Especially when an aqueous solvent is used, it is preferred that a slurry is formed using a thickening agent and a latex of, e.g., a styrene-butadiene rubber (SBR). The thickening agent is generally used for adjusting the viscosity of a slurry. With respect to the thickening agent, there is no particular limitation, but, specifically, there can be mentioned carboxymethyl cellulose, methyl cellulose, hydroxymethyl cellulose, ethyl cellulose, polyvinyl alcohol, oxidized starch, starch phosphate, casein, and salts thereof. These thickening agents may be used individually, or two or more types of the thickening agents may be used in an arbitrary combination and in an arbitrary ratio.

When a thickening agent is further added, the content of the thickening agent in the positive electrode active material layer is 0.1% by mass or more, preferably 0.5% by mass or more, more preferably 0.6% by mass or more, and the upper limit of the content of the thickening agent is 5% by mass, preferably 3% by mass, more preferably 2% by mass. When the content of the thickening agent in the positive electrode active material layer is in the above range, excellent application properties can be obtained, and further a lowering of the battery capacity or an increase of the resistance can be suppressed.

### <Current collector>

With respect to the material for the positive electrode current collector, there is no particular limitation, and a known material can be arbitrarily used. Specific examples of materials include metal materials, such as aluminum, stainless steel, nickel plating, titanium, and tantalum; and carbonaceous materials, such as carbon cloth and carbon paper. Of these, preferred are metal materials, and aluminum is especially preferred.

With respect to the form of the current collector, in the case of a metal material, examples of forms include a metal foil, a metal cylinder, a metal coil, a metal plate, a metal thin film, an expanded metal, a punching metal, and a foamed metal, and, in the case of a carbonaceous material, examples of forms include a carbon plate, a carbon thin film, and a carbon cylinder. Of these, a metal thin film is preferred. The thin film may be appropriately formed into a mesh form. The thickness of the thin film is arbitrary, but, from the viewpoint of the strength and the handling properties of the current collector, the thickness of the thin film is generally 1 µm or more, preferably 3 µm or more, more preferably 5 µm or more, and the upper limit of the thickness is generally 1 mm, preferably 100 µm, more preferably 50 µm.

Further, it is preferred that the current collector has a conductive auxiliary applied onto the surface thereof from the viewpoint of reducing the electronic contact resistance between the current collector and the positive electrode active material layer. Examples of conductive auxiliaries include carbon, and noble metals, such as gold, platinum, and silver.

Further, for improving the binding effect of the current collector and the active material layer formed on the surface of the current collector, the surface of the current collector may be preliminarily subjected to surface roughening treatment. Examples of surface roughening methods include a blast treatment, a method in which rolling is performed using a surface roughening roll, a mechanical polishing method in which the surface of the current collector is polished using, for example, a coated abrasive having abrasive particles fixed thereonto, a sand grindstone, an emery buff, or a wire brush having a steel wire, an electrolytic polishing method, and a chemical polishing method.

With respect to the thickness ratio of the current collector and the positive electrode active material layer, there is no particular limitation. However, a value of (the thickness of the positive electrode active material layer on one side immediately before injecting the electrolytic solution)/(the thickness of the current collector) is preferably 20 or less, more preferably 15 or less, most preferably 10 or less, and the lower limit of the value is preferably 0.5, more preferably 0.8, most preferably 1. When the value of the thickness ratio is in the above range, heat generation of the current collector during the high current-density charging and discharging of the secondary battery is suppressed, making it possible to secure a battery capacity.

### <Electrode area>

When the non-aqueous electrolytic solution of the present invention is used, from the viewpoint of improving the stability at high output and at high temperatures, it is preferred that the area of the positive electrode active material layer is large, relative to the outer surface area of a battery outer casing. Specifically, the total electrode area of the positive electrode is preferably 15 times or more, more preferably 40 times or more, in terms of an area ratio, the surface area of the outer casing of the non-aqueous electrolyte secondary battery. The outer surface area of the outer casing in the case of a closed-end rectangular shape means the total area determined by calculation from the sizes of the vertical and horizontal thicknesses of the casing portion filled with electricity generating elements, excluding the protruding portion of the terminal. The outer surface area of the outer casing in the case of a closed-end cylindrical shape means a geometric surface area of a cylinder determined when the casing portion filled with electricity generating elements, excluding the protruding portion of the terminal, is presumed to approximate to the cylinder. The total electrode area of the positive electrode means a geometric surface area of the positive electrode active material layer opposite to the active material layer containing the negative electrode active material, and, in the structure having formed on both sides the positive electrode active material layers through a current collector foil, the total electrode area of the positive electrode means the total of areas individually calculated for the respective sides.

### <Thickness of the positive electrode plate>

With respect to the thickness of the above-described positive electrode plate having the positive electrode active material layer formed on the current collector, there is no particular limitation. However, from the viewpoint of the high capacity and high output, with respect to the thickness of the active material layer, excluding the thickness of the metal foil as a core material, per one side of the current collector, the lower limit is preferably 10 µm, more preferably 20 µm, and the upper limit is preferably 500 µm. more preferably 450 µm.

### <Surface coating of the positive electrode plate>

The positive electrode plate having deposited on the surface thereof a substance having a composition different from that of the substance constituting the positive electrode plate may be used. Examples of the surface deposition substances include oxides, such as aluminum oxide, silicon oxide, titanium oxide, zirconium oxide, magnesium oxide, calcium oxide, boron oxide, antimony oxide, and bismuth oxide; sulfates, such as lithium sulfate, sodium sulfate, potassium sulfate, magnesium sulfate, calcium sulfate, and aluminum sulfate; carbonates, such as lithium carbonate, calcium carbonate, and magnesium carbonate; and carbon.

### [2-3. Negative electrode]

With respect to the negative electrode active material used in the negative electrode in the non-aqueous electrolyte secondary battery of the present invention, there is no particular limitation as long as it is capable of electrochemically having occluded therein and releasing metal ions. Specific examples of the negative electrode active materials include carbonaceous materials, alloy materials, and lithium-containing metal composite oxide materials. Among these, carbonaceous materials are most preferably used from the viewpoint of exhibiting excellent cycle characteristics and safety and further exhibiting excellent continuous charging characteristics. These materials may be used individually, or two or more types of the materials may be used in an arbitrary combination and in an arbitrary ratio.

### <Carbonaceous material>

Examples of carbonaceous materials include (1) natural graphite, (2) artificial graphite, (3) amorphous carbon, (4) carbon-coated graphite, (5) graphite-coated graphite, and (6) resin-coated graphite.
(1) Examples of natural graphite include scale graphite, flake graphite, soil graphite and/or graphite particles obtained by subjecting the above graphite as a raw material to, for example, sphere forming treatment or densifying treatment. Among these, from the viewpoint of the filling properties of particles and the charge-discharge rate characteristics, especially preferred is graphite of a spherical shape or an ellipsoidal shape which has been subjected to sphere forming treatment.
   As an apparatus used for performing a sphere forming treatment, there can be used, for example, an apparatus which repeatedly exerts to particles a mechanical action, such as a compression, friction, or shearing force, which is mainly an impact force and includes an interaction between the particles. Specifically, preferred is an apparatus which has in a casing a rotor having disposed thereon a number of blades, and which performs a sphere forming treatment by rotating the rotor at a high speed to exert a mechanical action, such as an impact compression, friction, or shearing force, to a carbonaceous material introduced into the apparatus. Further, the apparatus preferably has a mechanism that circulates a carbonaceous material so as to repeatedly exert a mechanical action to the carbonaceous material.
   For example, when a sphere forming treatment is performed using the above-mentioned apparatus, the circumferential velocity of the rotating rotor is preferably 30 to 100 m/second, more preferably 40 to 100 m/second, further preferably 50 to 100 m/second. Further, the treatment can be made merely by passing a carbonaceous material through the apparatus. However, the treatment is preferably performed by circulating a carbonaceous material through or allowing a carbonaceous material to reside in the apparatus for 30 seconds or more, more preferably performed by circulating a carbonaceous material through or allowing a carbonaceous material to reside in the apparatus for one minute or more.
(2) Examples of artificial graphite include ones which are produced by graphitizing an organic compound, such as coal tar pitch, a coal heavy oil, an atmospheric residual oil, a petroleum heavy oil, an aromatic hydrocarbon, a nitrogen-containing cyclic compound, a sulfur-containing cyclic compound, polyphenylene, polyvinyl chloride, polyvinyl alcohol, polyacrylonitrile, polyvinyl butyral, a natural polymer, polyphenylene sulfide, polyphenylene oxide, a furfuryl alcohol resin, a phenol-formaldehyde resin, or an imide resin, at a temperature generally in the range of from 2,500 to 3,200°C, and, if necessary, subjecting the resultant material to pulverization and/or classification.
   In the above graphitization, for example, a silicon-containing compound or a boron-containing compound can be used as a graphitizing catalyst. As an example of the artificial graphite obtained using a graphitizing catalyst, there can be mentioned artificial graphite obtained by graphitizing mesocarbon microbeads separated during the heat treatment for pitch. Further, there can be mentioned artificial graphite of granulated particles comprising primary particles. Examples of such artificial graphite particles include graphite particles having a plurality of flattened-shaped particles which are gathered or bonded together so that the orientation planes of the particles are not parallel to each other, wherein the graphite particles are obtained by mixing together a graphitizable carbonaceous material powder, such as mesocarbon microbeads or coke, a graphitizable binder, such as tar or pitch, and a graphitizing catalyst, and graphitizing the resultant mixture and, if necessary, subjecting the resultant material to pulverization.
(3) Examples of amorphous carbon include amorphous carbon particles obtained by subjecting a graphitizable carbon precursor, such as tar or pitch, as a raw material to heat treatment once or more times in a temperature region in which the material is not graphitized (in the range of from 400 to 2,200°C), and amorphous carbon particles obtained by subjecting a non-graphitizable carbon precursor, such as a resin, as a raw material to heat treatment.
(4) As an example of carbon-coated graphite, there can be mentioned a carbon-graphite composite having natural graphite and/or artificial graphite as nucleus graphite, which is coated with amorphous carbon, wherein the carbon-graphite composite is obtained by mixing together natural graphite and/or artificial graphite and a carbon precursor which is an organic compound, such as tar, pitch, or a resin, and subjecting the resultant mixture to heat treatment once or more times at a temperature in the range of from 400 to 2,300°C. The form of the composite may be a form in which all of or part of the surface of graphite is coated with carbon, and may be a form in which the composite is formed from a plurality of graphite primary particles bound using carbon derived from the above carbon precursor as a binder. Alternatively, a carbon-graphite composite can be obtained by reacting natural graphite and/or artificial graphite with a hydrocarbon gas, such as benzene, toluene, methane, propane, or an aromatic volatile component, at a high temperature to deposit carbon on the surface of the graphite (CVD).
(5) As an example of graphite-coated graphite, there can be mentioned graphite-coated graphite having natural graphite and/or artificial graphite as nucleus graphite, all of or part of the surface of which is coated with a graphitization product, wherein the graphite-coated graphite is obtained by mixing together natural graphite and/or artificial graphite and a carbon precursor which is a graphitizable organic compound, such as tar, pitch, or a resin, and subjecting the resultant mixture to heat treatment once or more times at a temperature in the range of from about 2,400 to 3,200°C.
(6) As an example of resin-coated graphite, there can be mentioned resin-coated graphite having natural graphite and/or artificial graphite as nucleus graphite, which is coated with, for example, a resin, wherein the resin-coated graphite is obtained by mixing together natural graphite and/or artificial graphite and, for example, a resin, and drying the resultant mixture at a temperature lower than 400°C.

The carbonaceous materials (1) to (6) may be used individually, or two or more types of the carbonaceous materials may be used in an arbitrary combination and in an arbitrary ratio.

Examples of organic compounds used for producing the carbonaceous materials (2) to (5) above, such as tar, pitch, and a resin, include carbonizable organic compounds selected from the group consisting of a coal heavy oil, a straight-run heavy oil, a cracked petroleum heavy oil, an aromatic hydrocarbon, an N-ring compound, an S-ring compound, polyphenylene, an organic synthetic polymer, a natural polymer, a thermoplastic resin, and a thermosetting resin. Further, for adjusting the viscosity of the raw material organic compound being mixed, the raw material organic compound may be dissolved in a low-molecular organic solvent.

With respect to the natural graphite and/or artificial graphite which is used as a raw material for the nucleus graphite, natural graphite which has been subjected to sphere forming treatment is preferred.

### <Physical properties of the carbonaceous material>

In addition to the above-mentioned requirements, the carbonaceous material as the negative electrode active material in the present invention preferably satisfies at least one of items (1) to (9) shown below for characteristic features including physical properties and forms, and especially preferably simultaneously satisfies two or more of the items.

### (1) X-ray parameter

With respect to the carbonaceous material, the d value (distance between layers) on the lattice plane (002 plane) as determined by X-ray diffraction in accordance with a Gakushin method is preferably 0.335 nm or more, and is generally 0.360 nm or less, preferably 0.350 nm or less, further preferably 0.345 nm or less. Further, the crystallite size (Lc) of the carbonaceous material as determined by X-ray diffraction in accordance with a Gakushin method is preferably 1.0 nm or more, more preferably 1.5 nm or more, further preferably 2 nm or more.

### (2) Volume-based average particle diameter

In the present invention, the volume-based average particle diameter of the carbonaceous material is a volume-based average particle diameter (median diameter d50) as determined by a laser diffraction/scattering method, and is generally 1 µm or more, preferably 3 µm or more, further preferably 5 µm or more, especially preferably 7 µm or more, and is generally 100 µm or less, preferably 50 µm or less, more preferably 40 µm or less, further preferably 30 µm or less, especially preferably 25 µm or less.

When the volume-based average particle diameter of the carbonaceous material is in the above range, an initial loss of the battery capacity due to an increase of the irreversible capacity can be suppressed. Further, a uniform electrode application can be made when including a step for the electrode preparation by application.

The measurement of a volume-based average particle diameter can be conducted using a laser diffraction/scattering-type particle size distribution meter (LA-700, manufactured by HORIBA, Ltd.) with respect to a carbonaceous material powder dispersed in a 0.2% by mass aqueous solution (about 10 mL) of polyoxyethylene (20) sorbitan monolaurate which is a surfactant. The median diameter determined by the above measurement is defined as a volume-based average particle diameter of the carbonaceous material.

### (3) Raman R value, Raman half band width

The Raman R value of the carbonaceous material is a value measured using an argon-ion laser Raman spectrum method, and is generally 0.01 or more, preferably 0.03 or more, further preferably 0.1 or more, and is generally 1.5 or less, preferably 1.2 or less, further preferably 1 or less, especially preferably 0.5 or less.

Further, with respect to the Raman half band width of the carbonaceous material at around 1,580 cm⁻¹, there is no particular limitation, but the Raman half band width is generally 10 cm⁻¹ or more, preferably 15 cm⁻¹ or more, and is generally 100 cm⁻¹ or less, preferably 80 cm⁻¹ or less, further preferably 60 cm⁻¹ or less, especially preferably 40 cm⁻¹ or less.

The Raman R value and Raman half band width are indices indicating the crystalline properties of the surface of the carbonaceous material, and it is preferred that the carbonaceous material has appropriate crystalline properties from the viewpoint of the chemical stability and, meanwhile, has crystalline properties such that sites between the layers which lithium goes into do not disappear due to charging and discharging. When the negative electrode is increased in density by pressing after applied onto a current collector, the crystals are likely to be oriented in the direction parallel to the electrode plate, and therefore it is preferred to take this into consideration.

When the Raman R value or Raman half band width of the carbonaceous material is in the above range, a reaction of the carbonaceous material and the non-aqueous electrolytic solution can be suppressed, and further deterioration of the load characteristics due to disappearance of the sites can be suppressed.

The measurement of a Raman spectrum is conducted using a Raman spectrometer (Raman Spectrometer, manufactured by JASCO Corporation) by allowing a sample to freely fall in a measurement cell so as to fill the cell with the sample and, while irradiating the surface of the sample in die cell with an argon-ion laser, rotating the cell within the plane perpendicular to the laser. With respect to the obtained Raman spectrum, intensity I_{A} of peak P_{A} appearing at around 1,580 cm⁻¹ and intensity I_{B} of peak P_{B} appearing at around 1,360 cm⁻¹ are measured, and intensity ratio R (R = I_{B}/I_{A}) is determined by calculation. The Raman R value determined by the above measurement is defined as a Raman R value of the carbonaceous material. Further, a half band width of peak P_{A} appearing at around 1,580 cm⁻¹ in the obtained Raman spectrum is measured, and this is defined as a Raman half band width of the carbonaceous material.

Conditions for the above Raman measurement are as follows.
- Wavelength of argon ion laser: 514.5 nm
- Laser power on a sample: 15 to 25 mW
- Resolution: 10 to 20 cm⁻¹
- Measuring range: 1,100 to 1,730 cm⁻¹
- Analysis for Raman R value and Raman half band width:
   Background processing
- Smoothing processing: Simple average, convolution 5 points

### (4) BET Specific surface area

The BET specific surface area of the carbonaceous material is a value of a specific surface area measured using a BET method, and is generally 0.1 m²·g⁻¹ or more, preferably 07 m²·g⁻¹ or more, further preferably 1.0 m²·g⁻¹ or more, especially preferably 1.5 m²·g⁻¹ or more, and is generally 100 m²·g⁻¹ or less, preferably 25 m²·g⁻¹ or less, further preferably 15 m²·g⁻¹ or less, especially preferably 10 m²·g⁻¹ or less.

When the BET specific surface area value of the carbonaceous material is in the above range, deposition of lithium on the surface of the electrode can be suppressed, and further, gas generation due to a reaction of the carbonaceous material with the non-aqueous electrolytic solution can be suppressed.

The measurement of a specific surface area by a BET method is conducted using a surface area meter (Fully-automatic surface area measurement apparatus, manufactured by Ohkura Riken Inc.) by subjecting a sample to predrying under a nitrogen gas flow at 350°C for 15 minutes, and then making a measurement in accordance with a nitrogen adsorption BET single-point method by a gas flow method using a nitrogen-helium mixed gas accurately prepared so that the nitrogen pressure relative to atmospheric pressure becomes 0.3. The specific surface area determined by the above measurement is defined as a BET specific surface area of the carbonaceous material.

### (5) Roundness

When a roundness is measured as the degree of sphere of the carbonaceous material, the roundness preferably falls within the range shown below. The roundness is defined by "Roundness = (Length of the circumference of the particle equivalent circle having the same area as that of the projected particle shape)/(Length of the actual circumference of the projected particle shape)", and, when the material has a roundness of 1, it is theoretically a true sphere. The roundness of the particles of the carbonaceous material having a particle diameter in the range of from 3 to 40 µm is desirably close to 1, and is preferably 0.1 or more, particularly, preferably 0.5 or more, more preferably 0.8 or more, further preferably 0.85 or more, especially preferably 0.9 or more.

The larger the roundness of the carbonaceous material, the more the filling properties are improved, and hence the resistance between the particles can be suppressed, and thus the high current-density charge-discharge characteristics of a secondary battery are improved. Therefore, the roundness of the carbonaceous material is preferably higher as mentioned in the above range.

The measurement of a roundness of the carbonaceous material is conducted using a flow-type particle image analyzer (FPIA, manufactured by Sysmex Corporation). About 0.2 g of a sample is dispersed in a 0.2% by mass aqueous solution (about 50 mL) of polyoxyethylene (20) sorbitan monolaurate which is a surfactant, and irradiated with ultrasonic waves with 28 kHz at a power of 60 W for one minute and then, a detection range of from 0.6 to 400 µm is designated, and a roundness is measured with respect to the particles having a particle diameter in the range from 3 to 40 µm. The roundness determined by the above measurement is defined as a roundness of the carbonaceous material.

With respect to the method for improving the roundness, there is no particular limitation. However, preferred are the particles which have been subjected to sphere forming treatment so as to be spherical because an electrode formed from such particles is advantageous in that the shapes of voids between the particles are uniform. As examples of the sphere forming treatments, there can be mentioned a method in which a shearing force or a compressive force is applied to particles to mechanically force them to be close to a sphere, and a mechanical or physical treatment method in which a plurality of microparticles are subjected to granulation using a binder or an adhesive force of the particles themselves.

### (6) Tap density

The tap density of the carbonaceous material is generally 0.1 g·cm⁻³ or more, preferably 0.5 g·cm⁻³ or more, further preferably 0.7 g·cm⁻³ or more, especially preferably 1 g·cm⁻³ or more, and the tap density is preferably 2 g·cm⁻³ or less, further preferably 1.8 g·cm⁻³ or less, especially preferably 1.6 g·cm⁻³ or less. When the tap density of of the carbonaceous material is in the above range, not only can the battery capacity be secured, but also an increase of the resistance between the particles can be suppressed.

The measurement of a tap density is conducted as follows. A sample is passed through a sieve having a sieve opening of 300 µm, and allowed to fall in a 20 cm³ tapping cell to fill the cell with the sample so that the sample reaches the upper end surface of the cell, and then, using a powder density measurement apparatus (for example, Tap Denser, manufactured by Seishin Enterprise Co., Ltd.), the resultant sample is subjected to 1,000-time tapping with a stroke length of 10 mm, and a tap density is determined by making a calculation from a volume measured at that time and the mass of the sample. The tap density determined by the above measurement is defined as a tap density of the carbonaceous material.

### (7) Orientation ratio

The orientation ratio of the carbonaceous material is generally 0.005 or more, preferably 0.01 or more, further preferably 0.015 or more, and is generally 0.67 or less. When the orientation ratio of the carbonaceous material is in the above range, a secondary battery having excellent high-density charge-discharge characteristics can be surely obtained. The above-mentioned upper limit of the range is the theoretical upper limit of the orientation ratio of the carbonaceous material.

An orientation ratio of the carbonaceous material is measured by X-ray diffraction with respect to a sample which has been subjected to press molding. A molding machine having a diameter of 17 mm is filled with 0.47 g of a sample, and the sample is compressed at 58.8 MN·m⁻², and the resultant molded material is set using clay so as to be on the same plane as the plane of a sample holder for measurement, and subjected to X-ray diffraction measurement. From the obtained peak intensities of the (110) diffraction and (004) diffraction of carbon, a ratio represented by (110) diffraction peak intensity/(004) diffraction peak intensity is determined by calculation. The orientation ratio determined by the above measurement is defined as an orientation ratio of the carbonaceous material.

Conditions for the X-ray diffraction measurement are as follows. "2θ" indicates an angle of diffraction.
• Target: Cu (Kα-line) graphite monochromator
• Slit:
Divergence slit = 0.5°
Receiving slit = 0.15 mm
Scatter slit = 0.5°

• Measuring range and step angle/measuring time:

| | |
|---|---|
| (110) plane: 75° ≤ 2θ ≤ 80° | 1°/60 seconds |
| (004) plane: 52° ≤ 2θ ≤ 57° | 1°/60 seconds |

### (8) Aspect ratio

The aspect ratio of the carbonaceous material is generally 1 or more, and is generally 10 or less, preferably 8 or less, further preferably 5 or less. When the aspect ratio of the carbonaceous material is in the above range, the occurrence of a streak line upon forming an electrode plate is prevented, and further uniform application can be made, so that a secondary battery having excellent high current-density charge-discharge characteristics can be surely obtained. The above-mentioned lower limit of the range is the theoretical lower limit of the aspect ratio of the carbonaceous material.

The aspect ratio of the carbonaceous material is measured by observing the particles of carbonaceous material magnified by means of a scanning electron microscope. 50 Arbitrary graphite particles fixed to the edge face of a metal having a thickness of 50 µm or less are selected, and individually three-dimensionally observed while rotating and slanting the stage having the sample fixed thereto, and diameter A, which is the largest diameter of the carbonaceous material particle, and diameter B, which is the shortest diameter perpendicular to diameter A, are measured and an average of the A/B values is determined. The aspect ratio (A/B) determined by the above measurement is defined as an aspect ratio of the carbonaceous material.

### (9) Sub-material mixing

The sub-material mixing means that two types or more of carbonaceous materials having different "properties" are contained in the negative electrode and/or negative electrode active material. The term "properties" used here indicates one or more properties selected from the group of an X-ray diffraction parameter, a median diameter, an aspect ratio, a BET specific surface area, an orientation ratio, a Raman R value, a tap density, a true density, a pore distribution, a roundness, and an ash content.

As especially preferred examples of the sub-material mixing, there can be mentioned mixing which is made so that the volume-based particle size distribution is not symmetrical with respect to the median diameter as a center, mixing which is made so that two types or more of carbonaceous materials having different Raman R values are contained, and mixing which is made so that there are different X-ray diffraction parameters.

As an example of the effect of the sub-material mixing, there can be mentioned an effect such that a carbonaceous material, for example, graphite, such as natural graphite or artificial graphite, carbon black, such as acetylene black, or amorphous carbon, such as needle coke, is contained as a conductor to reduce the electric resistance.

When a conductor is mixed as sub-material mixing, the conductors may be used individually, or two or more types of the conductors may be used in an arbitrary combination and in an arbitrary ratio. The content of the conductor in the negative electrode active material layer is generally 0.1 % by mass or more, preferably 0.5% by mass or more, further preferably 0.6% by mass or more, and is generally 45% by mass or less, preferably 40% by mass or less. When the content of the conductor in the negative electrode active material layer is in the above range, an electric resistance reducing effect can be surely obtained, and further an increase of the initial irreversible capacity of the secondary battery can be suppressed.

### <Alloy material>

With respect to the alloy material used as a negative electrode active material, there is no particular limitation as long as it is capable of having occluded therein and releasing lithium, and any of lithium simple substance, a metal simple substance or alloy forming an alloy together with lithium, and a compound thereof, such as an oxide, a carbide, a nitride, a silicide, a sulfide, or a phosphide, may be used. With respect to the metal simple substance or alloy forming an alloy together with lithium, preferred are materials containing a metal or semi-metal element belonging to Group 13 or 14 of the Periodic Table (namely, excluding carbon), and more preferred are metal simple substances of aluminum, silicon, and tin (hereinafter, these elements are frequently referred to as "specific metal elements") and alloys or compounds containing these atoms. These materials may be used individually, or two or more types of the materials may be used in an arbitrary combination and in an arbitrary ratio.

Examples of negative electrode active materials having at least one atom selected from the specific metal elements include respective metal simple substances of the specific metal elements, alloys comprising two or more specific metal elements, alloys comprising one or two or more specific metal elements and one or two or more other metal elements, compounds containing one or two or more specific metal elements, and composite compounds, such as an oxide, carbide, nitride, silicide, sulfide, or phosphide, of the above compound. By using the above metal simple substance, alloy, or metal compound as a negative electrode active material, it is possible to increase the non-aqueous electrolyte secondary battery in capacity.

Further, there can be mentioned compounds formed from the above composite compound complicatedly bonded to several elements, such as a metal simple substance, an alloy, or a nonmetallic element. Specifically, for example, with respect to silicon or tin, an alloy of the element and a metal which does not act as a negative electrode can be used. For example, in the case of tin, there can be used a complicated compound comprising a combination of tin, a metal other than silicon which acts as a negative electrode, a metal which does not act as a negative electrode, and a nonmetallic element so as to contain 5 to 6 elements.

Among these negative electrode active materials, preferred are respective metal simple substances of the specific metal elements, alloys of two or more specific metal elements, and oxides, carbides, nitrides and the like of the specific metal elements because the resultant non-aqueous electrolyte secondary battery has a large capacity per unit mass. Especially preferred are a metal simple substance, an alloy, an oxide, a carbide, and a nitride of silicon and/or tin from the viewpoint of the capacity per unit mass and load on the environment.

### <Lithium-containing metal composite oxide material>

With respect to the lithium-containing metal composite oxide material used as a negative electrode active material, there is no particular limitation as long as it is capable of having occluded therein and releasing lithium. However, from the viewpoint of the high current-density charge-discharge characteristics, a material containing titanium and lithium is preferred, a lithium-containing composite metal oxide material containing titanium is more preferred, and a composite oxide of lithium and titanium (hereinafter, frequently referred to simply as "lithium-titanium composite oxide") is further preferred. That is, the use of the negative electrode active material containing a lithium-titanium composite oxide having a spinel structure is especially preferred because the output resistance of the secondary battery is markedly reduced.

Further, the lithium-titanium composite oxide is also preferably one having lithium or titanium replaced by another metal element, for example, at least one element selected from the group consisting of Na, K, Co, Al, Fe, Ti, Mg, Cr, Ga, Cu, Zn, and Nb. The above-mentioned metal oxide is preferably a lithium-titanium composite oxide represented by the general formula (C) below, wherein the relationships: 0.7 ≤ x ≤ 1.5, 1.5 ≤ y ≤ 2.3, and 0 ≤ z ≤ 1.6 are satisfied, because the structure is stable upon doping or dedoping for lithium ions.

LixTiyMzO₄ (C)

In the general formula (C), M represents at least one element selected from the group consisting of Na, K, Co, Al, Fe, Ti, Mg, Cr, Ga, Cu, Zn, and Nb.

Among the compositions represented by the general formula (C) above, especially preferred are structures which respectively satisfy the following relationships:
(a) 1.2 ≤ x ≤ 1.4, 1.5 ≤ y ≤ 1.7, z = 0
(b) 0.9 ≤ x ≤ 1.1, 1.9 ≤ y ≤ 2.1, z = 0
(c) 0.7 ≤ x ≤ 0.9, 2.1 ≤ y ≤ 2.3, z = 0
because the balance of battery performance is excellent.

Especially preferred representative compositions of the above compound are Li_{4/3}Ti_{5/3}O₄ for structure (a), Li₁Ti₂O₄ for structure (b), and Li_{4/5}Ti_{11/5}O₄ for structure (c). Further, with respect to the structure in which Z ≠ 0, as a preferred example, there can be mentioned Li_{4/3}Ti_{4/3}Al_{1/3}O₄.

With respect to the method for producing the lithium-titanium composite oxide, there is no particular limitation as long as the non-aqueous electrolyte secondary battery of the present invention can be obtained, but several methods can be mentioned, and a general method for producing an inorganic compound is used.

For example, there can be mentioned a method in which a titanium raw material, such as titanium oxide, and, if necessary, other element raw materials, and a Li source, such as LiOH, Li₂CO₃, or LiNO₃, are uniformly mixed with one another, followed by calcination at a high temperature, to obtain an active material.

Particularly, as a method for producing an active material of a spherical shape or an ellipsoidal shape, various methods can be considered. As an example, there can be mentioned a method in which a titanium raw material, such as titanium oxide, and, if necessary, other element raw materials are dissolved in or pulverized and dispersed in a solvent, such as water, and the pH of the resultant solution or dispersion is controlled while stirring to form a spherical precursor, and the formed spherical precursor is recovered, and dried if necessary, and then a Li source, such as LiOH, Li₂CO₃, or LiNO₃, is added to the precursor, followed by calcination at a high temperature, to obtain a negative electrode active material.

As an alternative method, there can be mentioned a method in which a titanium raw material, such as titanium oxide, and, if necessary, other element raw materials are dissolved in or pulverized and dispersed in a solvent, such as water, and the resultant solution or dispersion is shaped by drying using, e.g., a spray dryer to form a precursor of a spherical shape or an ellipsoidal shape, and a Li source, such as LiOH, Li₂CO₃. or LiNO₃, is added to the precursor, followed by calcination at a high temperature, to obtain a negative electrode active material.

As a further alternative method, there can be mentioned a method in which a titanium raw material, such as titanium oxide, a Li source, such as LiOH, Li₂CO₃, or LiNO₃, and, if necessary, other element raw materials are dissolved in or pulverized and dispersed in a solvent, such as water, and the resultant solution or dispersion is shaped by drying using, e.g., a spray dryer to form a precursor of a spherical shape or an ellipsoidal shape, and the precursor is subjected to calcination at a high temperature to obtain an active material.

In the step in the above-described various methods, an element other than Ti, for example, Al, Mn, Ti, V, Cr, Mn, Fe, Co, Li, Ni, Cu, Zn, Mg, Ga, Zr, C, Si, Sn, or Ag can be present in the form of being in a metal oxide structure containing titanium and/or being in contact with an oxide containing titanium. When these elements are contained in the negative electrode active material, it becomes possible to control the operating voltage and capacity of the secondary battery.

### <Physical properties of the lithium-titanium composite oxide>

In addition to the above-mentioned requirements, the lithium-titanium composite oxide as the negative electrode active material in the present invention preferably satisfies at least one of items (1) to (7) shown below for characteristic features including physical properties and forms, and especially preferably simultaneously satisfies two or more of the items.

### (1) BET Specific surface area

The BET specific surface area of the lithium-titanium composite oxide used as a negative electrode active material is a specific surface area measured using a BET method, and is preferably 0.5 m²•g⁻¹ or more, more preferably 0.7 m²•g⁻¹ or more, further preferably 1.0 M²•g⁻¹ or more, especially preferably 1.5 m²•g⁻¹ or more, and is preferably 200 m²•g⁻¹ or less, more preferably 100 m²•g⁻¹ or less, further preferably 50 m²•g⁻¹ or less, especially preferably 25 m²•g⁻¹ or less.

When the BET specific surface area of the lithium-titanium composite oxide is smaller than the above range, it is likely that the reaction area of the lithium-titanium composite oxide used as a negative electrode material in contact with the non-aqueous electrolytic solution is reduced, so that the output resistance of the secondary battery is increased. On the other hand, when the BET specific surface area of the lithium-titanium composite oxide is larger than the above range, it is likely that portions of surfaces or edge faces of crystals of the metal oxide containing titanium are increased, and such an increase of the portions causes strain in the crystals so that the resultant irreversible capacity cannot be disregarded, making it difficult to obtain a preferred secondary battery.

The measurement of a specific surface area of the lithium-titanium composite oxide by a BET method is conducted using a surface area meter (Fully-automatic surface area measurement apparatus, manufactured by Ohkura Riken Inc.) by subjecting a sample to predrying under a nitrogen gas flow at 350°C for 15 minutes, and then making a measurement in accordance with a nitrogen adsorption BET single-point method by a gas flow method using a nitrogen-helium mixed gas accurately prepared so that the nitrogen pressure relative to atmospheric pressure becomes 0.3. The specific surface area determined by the above measurement is defined as a BET specific surface area of the lithium-titanium composite oxide in the present invention.

### (2) Volume-based average particle diameter

The volume-based average particle diameter of the lithium-titanium composite oxide (secondary particle diameter when the primary particles of the lithium-titanium composite oxide undergo aggregation to form secondary particles) is defined as a volume-based average particle diameter (median diameter) determined by a laser diffraction/scattering method.

The volume-based average particle diameter of the lithium-titanium composite oxide is preferably 0.1 µm or more, more preferably 0.5 µm or more, further preferably 0.7 µm or more, and is preferably 50 µm or less, more preferably 40 µm or less, further preferably 30 µm or less, especially preferably 25 µm or less.

The measurement of a volume-based average particle diameter of the lithium-titanium composite oxide is conducted, specifically, using a laser diffraction/scattering-type particle size distribution meter (LA-700, manufactured by HORIBA, Ltd.) with respect to a lithium-titanium composite oxide powder dispersed in a 0.2% by mass aqueous solution (10 mL) of polyoxyethylene (20) sorbitan monolaurate which is a surfactant. The median diameter determined by the above measurement is defined as a volume-based average particle diameter of the lithium-titanium composite oxide.

When the volume average particle diameter of the lithium-titanium composite oxide is smaller than the above range, it is likely that a binder in a large amount is required when producing a negative electrode, so that the battery capacity is lowered. On the other hand, when the volume average particle diameter of the lithium-titanium composite oxide is larger than the above range, it is likely that an uneven surface of the applied layer is formed when producing a negative electrode plate, and this is disadvantageous to the battery production process.

### (3) Average primary particle diameter

When the primary particles of the lithium-titanium composite oxide undergo aggregation to form secondary particles, the average primary particle diameter of the lithium-titanium composite oxide is preferably 0.01 µm or more, more preferably 0.05 µm or more, further preferably 0.1 µm or more, especially preferably 0.2 µm or more, and is preferably 2 µm or less, more preferably 1.6 µm or less, further preferably 1.3 µm or less, especially preferably 1µm or less. When the volume-based average primary particle diameter of the lithium-titanium composite oxide is larger than the above range, there is a possibility that spherical secondary particles are difficult to form, so that the powder filling properties are adversely affected, or the specific surface area is markedly lowered, causing deterioration of battery performance, such as output characteristics. On the other hand, when the volume-based average primary particle diameter of the lithium-titanium composite oxide is smaller than the above range, it is generally likely that crystals do not well grow, causing deterioration of the secondary battery performance, for example, deterioration of the reversibility of charging and discharging.

The average primary particle diameter of the lithium-titanium composite oxide is measured by observation using a scanning electron microscope (SEM). Specifically, in a photomicrograph taken at a magnification such that the particles can be conformed, for example, at a magnification of 10,000 to 100,000 times, with respect to 50 arbitrary primary particles, a value of the longest section of a horizontal line defined by the boundaries of the primary particle on the both sides is determined, and an average of the obtained values is determined as an average primary particle diameter.

### (4) Shape

The shape of the particles of the lithium-titanium composite oxide may be, for example, a bulk shape, a polyhedral shape, a spherical shape, an ellipsoidal shape, a plate shape, a needle-like shape, or a cylindrical shape, which are conventionally used, but, of these, preferred are the particles of which primary particles undergo aggregation to form secondary particles wherein the shape of the formed secondary particles is a spherical shape or an ellipsoidal shape.

Generally, in an electrochemical element, the active material in the electrode suffers expansion or shrinkage during the charging and discharging of the element, and therefore, the resultant stress is likely to cause deterioration, such as a breakage of the active material or cutting of the conductive path. Therefore, rather than the active material in the form of individual particles of primary particles, the active material in a form such that primary particles of the active material undergo aggregation to form secondary particles can relax a stress due to the expansion or shrinkage to prevent deterioration.

Further, rather than the active material in the form of particles which undergo orientation along the axis, for example, which are of a plate shape, the active material in the form of particles of a spherical shape or an ellipsoidal shape is preferred because orientation of the particles is unlikely to occur upon forming the electrode, and hence the electrode is unlikely to suffer expansion or shrinkage during the charging and discharging, and further, when preparing the electrode, the particles and a conductor can be easily uniformly mixed with each other.

### (5) Tap density

The tap density of the lithium-titanium composite oxide is preferably 0.05 m•g⁻³ or more, more preferably 0.1 g•cm⁻³ or more, further preferably 0.2 g•cmg⁻³ or more, especially preferably 0.4 g•cm⁻³ or more, and is preferably 2.8 m•g⁻³ or less, further preferably 2.4 g•cm⁻³ or less, especially preferably 2 m•g⁻³ or less. When the tap density of the lithium-titanium composite oxide is smaller than the above range, the filling density is unlikely to be increased in the case of using the lithium-titanium composite oxide as a negative electrode, and further the contact area between the oxide particles is likely to be reduced, so that the resistance between the particles is increased, thus increasing the output resistance. On the other hand, when the tap density of the lithium-titanium composite oxide is larger than the above range, voids between the oxide particles in the electrode are likely to be markedly reduced, so that a flow path for the non-aqueous electrolytic solution is reduced, increasing the output resistance.

The measurement of a tap density of the lithium-titanium composite oxide is conducted as follows. A sample is passed through a sieve having a sieve opening of 300 µm, and allowed to fall in a 20 cm³ tapping cell to fill the cell with the sample so that the sample reaches the upper end surface of the cell, and then, using a powder density measurement apparatus (for example, Tap Denser, manufactured by Seishin Enterprise Co., Ltd.), the resultant sample is subjected to 1,000-time tapping with a stroke length of 10 mm, and a density is determined by making a calculation from a volume measured at that time and the mass of the sample. The tap density determined by the above measurement is defined as a tap density of the lithium-titanium composite oxide in the present invention.

### (6) Roundness

When a roundness is measured as the degree of sphere of the lithium-titanium composite oxide, the roundness preferably falls within the range shown below. The roundness is defined by "Roundness = (Length of the circumference of the particle equivalent circle having the same area as that of the projected particle shape)/(Length of the actual circumference of the projected particle shape), and, when the material has a roundness of 1, it is theoretically a true sphere.

The roundness of the lithium-titanium composite oxide is desirably close to 1, and is preferably 0.10 or more, more preferably 0.80 or more, further preferably 0.85 or more, especially preferably 0.90 or more. Generally, the larger the roundness, the more the high current-density charge-discharge characteristics of a non-aqueous electrolyte secondary battery are improved. Therefore, when the roundness of the lithium-titanium composite oxide is lower than the above range, it is likely that the filling properties of the negative electrode active material become poor, so that the resistance between the particles is increased, causing deterioration of the short-time, high current-density charge-discharge characteristics.

The measurement of a roundness of the lithium-titanium composite oxide is conducted using a flow-type particle image analyzer (FPIA, manufactured by Sysmex Corporation). Specifically, about 0.2 g of a sample is dispersed in a 0.2% by mass aqueous solution (about 50 mL) of polyoxyethylene (20) sorbitan monolaurate which is a surfactant, and irradiated with ultrasonic waves with 28 kHz at a power of 60 W for one minute and then, a detection range of from 0.6 to 400 µm is designated, and a roundness is measured with respect to the particles having a particle diameter in the range from 3 to 40 µm. The roundness determined by the above measurement is defined as a roundness of the lithium-titanium composite oxide in the present invention.

### (7) Aspect ratio

The aspect ratio of the lithium-titanium composite oxide is preferably 1 or more, and is preferably 5 or less, more preferably 4 or less, further preferably 3 or less, especially preferably 2 or less. When the aspect ratio of the lithium-titanium composite oxide is larger than the above range, it is likely that a streak line occurs upon forming an electrode plate or a uniform applied surface cannot be obtained, so that the short-time, high current-density charge-discharge characteristics of the non-aqueous electrolyte secondary battery become poor. The above-mentioned lower limit of the range is the theoretical lower limit of the aspect ratio of the lithium-titanium composite oxide.

The aspect ratio of the lithium-titanium composite oxide is measured by observing the particles of lithium-titanium composite oxide magnified by means of a scanning electron microscope. 50 Arbitrary lithium-titanium composite oxide particles fixed to the edge face of a metal having a thickness of 50 µm or less are selected, and individually three-dimensionally observed while rotating and slanting the stage having the sample fixed thereto, and diameter A, which is the largest diameter of the particle, and diameter B, which is the shortest diameter perpendicular to diameter A, are measured, and an average of the A/B values is determined. The aspect ratio (A/B) determined by the above measurement is defined as an aspect ratio of the lithium-titanium composite oxide in the present invention.

### <Construction of and preparation method for a negative electrode>

In the preparation of a negative electrode, any known method can be used as long as the effects of the present invention are not markedly sacrificed. For example, to the negative electrode active material are added a binder, a solvent, and, if necessary, a thickening agent, a conductor, and a filler to obtain a slurry, and the resultant slurry is applied to a current collector and dried, followed by pressing, to form a negative electrode active material layer.

Further, when an alloy material is used, a method is employed in which a thin film layer containing the above-mentioned negative electrode active material (negative electrode active material layer) is formed by a method, such as a deposition method, a sputtering method, or a plating method.

### <Current collector>

As a current collector having held thereon the negative electrode active material layer, a known current collector can be arbitrarily used. Examples of current collectors for the negative electrode include metal materials, such as aluminum, copper, nickel, stainless steel, and nickel-plated steel. From the viewpoint of the easy processing and the cost, copper is especially preferred.

The current collector for the negative electrode may be preliminarily subjected to surface roughening treatment.

With respect to the form of the current collector, when the current collector is a metal material, examples of forms include a metal foil, a metal cylinder, a metal coil, a metal plate, a metal thin film, an expanded metal, a punching metal, and a foamed metal. Of these, preferred is a metal foil, more preferred is a copper foil, and further preferred are a rolled copper foil formed by a rolling method, and an electrolytic copper foil formed by an electrolytic method, and any of them can be used as a current collector.

From the viewpoint of securing the battery capacity and the handling properties, the thickness of the current collector is generally 1 µm or more, preferably 5 µm or more, and is generally 100 µm or less, preferably 50 µm or less.

### (Thickness ratio of the current collector and the negative electrode active material layer)

With respect to the thickness ratio of the current collector and the negative electrode active material layer, there is no particular limitation. However, a value of "(the thickness of the negative electrode active material layer on one side immediately before injecting the non-aqueous electrolytic solution)/(the thickness of the current collector)" is preferably 150 or less, further preferably 20 or less, especially preferably 10 or less, and is preferably 0.1 or more, further preferably 0.4 or more, especially preferably 1 or more. When the thickness ratio of the current collector and the negative electrode active material layer is in the above range, not only can a battery capacity be secured, but also heat generation of the current collector during the high current-density charging and discharging of the secondary battery can be suppressed.

### <Binder>

With respect to the binder for binding the negative electrode active material, there is no particular limitation as long as it is a material stable to the solvent used for producing the non-aqueous electrolytic solution or electrode.

Specific examples of binders include resin polymers, such as polyethylene, polypropylene, polyethylene terephthalate, polymethyl methacrylate, aromatic polyamide, polyimide, cellulose, and nitrocellulose; rubbery polymers, such as an SBR (styrene-butadiene rubber), an isoprene rubber, a butadiene rubber, a fluororubber, an NBR (acrylonitrile-butadiene rubber), and an ethylene-propylene rubber; a styrene-butadiene-styrene block copolymer and hydrogenation products thereof; thermoplastic elastomer polymers, such as an EPDM (ethylene-propylene-diene terpolymer), a styrene-ethylene-butadiene-styrene copolymer, a styrene-isoprene-styrene block copolymer, and hydrogenation products thereof; soft resin polymers, such as syndiotactic 1,2-polybutadiene, polyvinyl acetate, an ethylene-vinyl acetate copolymer, and a propylene-α-olefin copolymer; fluoropolymers, such as polyvinylidene fluoride, polytetrafluoroethylene, fluorinated polyvinylidene fluoride, and a polytetrafluoroethylene-ethylene copolymer; and polymer compositions having ionic conductivity for alkali metal ions (particularly for lithium ions). These binders may be used individually, or two or more types of the binders may be used in an arbitrary combination and in an arbitrary ratio.

The content of the binder in the slurry, which is obtained by mixing together a negative electrode active material and a binder, and further, if necessary, for example, the below-mentioned solvent and thickening agent, is preferably 0.1% by mass or more, further preferably 0.5% by mass or more, especially preferably 0.6% by mass or more, and is preferably 20% by mass or less, more preferably 15% by mass or less, further preferably 10% by mass or less, especially preferably 8% by mass or less. When the content of the binder in the slurry is larger than the above range, the proportion of the binder which does not contribute to the battery capacity is likely to be increased to lower the battery capacity. On the other hand, when the content of the binder in the slurry is smaller than the above range, the strength of the negative electrode is likely to be lowered.

Particularly, when the slurry contains a rubbery polymer, such as an SBR, as a main component, the content of the binder in the slurry is generally 0.1 % by mass or more, preferably 0.5% by mass or more, further preferably 0.6% by mass or more, and is generally 5% by mass or less, preferably 3% by mass or less, further preferably 2% by mass or less. When the slurry contains a fluoropolymer, such as polyvinylidene fluoride, as a main component, the content of the binder in the slurry is generally 1% by mass or more, preferably 2% by mass or more, further preferably 3% by mass or more, and is generally 15% by mass or less, preferably 10% by mass or less, further preferably 8% by mass or less.

### <solvent for forming a slurry>

With respect to the type of the solvent used for forming a slurry, there is no particular limitation as long as it is a solvent capable of having dissolved or dispersed therein a negative electrode active material, a binder, and a thickening agent and a conductor used if necessary, and either an aqueous solvent or an organic solvent may be used.

Examples of aqueous solvents include water and alcohols, and examples of organic solvents include N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, dimethylacet amide, hexamethylphosphoramide, dimethyl sulfoxide, benzene, xylene, quinoline, pyridine, methylnaphthalene, and hexane.

Especially when an aqueous solvent is used, it is preferred that, for example, a dispersant is contained in combination with a thickening agent and a slurry is formed using a latex of, e.g., an SBR. These solvents may be used individually, or two or more types of the solvents may be used in an arbitrary combination and in an arbitrary ratio.

### <Thickening agent>

A thickening agent is generally used for adjusting the viscosity of a slurry. With respect to the thickening agent, there is no particular limitation, but, specifically, there can be mentioned carboxymethyl cellulose, methyl cellulose, hydroxymethyl cellulose, ethyl cellulose, polyvinyl alcohol, oxidized starch, starch phosphate, casein, and salts thereof. These thickening agents may be used individually, or two or more types of the thickening agents may be used in an arbitrary combination and in an arbitrary ratio.

When a thickening agent is further used, the content of the thickening agent in the slurry is generally 0.1% by mass or more, preferably 0.5% by mass or more, further preferably 0.6% by mass or more, and is generally 5% by mass or less, preferably 3% by mass or less, further preferably 2% by mass or less. When the content of the thickening agent in the slurry is in the above range, a lowering of the battery capacity or an increase of the resistance can be suppressed, and further appropriate application properties can be surely obtained.

### <Electrode density>

With respect to the electrode structure obtained after forming the electrode from the negative electrode active material, there is no particular limitation. However, the density of the negative electrode active material layer present on the current collector is preferably 1 g•cm⁻³ or more, further preferably 1.2 g•cm⁻³ or more, especially preferably 1.3 g•cm⁻³ or more, and is preferably 2.2 g•cm⁻³ or less, more preferably 2.1 g•cm⁻³ or less, further preferably 2.0 g•cm⁻³ or less, especially preferably 1.9 g•cm⁻³ or less. When the density of the negative electrode active material layer present on the current collector is in the above range, the negative electrode active material particles are prevented from suffering a breakage, so that it is possible to suppress an increase of the initial irreversible capacity of the non-aqueous electrolyte secondary battery and deterioration of the high current-density charge-discharge characteristics due to poor penetration of the non-aqueous electrolytic solution to around the current collector/negative electrode active material interface. Further, a lowering of the battery capacity and an increase of the resistance can be suppressed.

### <Thickness of the negative electrode plate>

The thickness of the above-described negative electrode plate having the negative electrode active material layer formed on the current collector is designed according to the positive electrode plate used, and there is no particular limitation. However, the thickness of the active material layer, excluding the thickness of the metal foil as a core material, is generally 15 µm or more, preferably 20 µm or more, more preferably 30 µm or more, and is generally 300 µm or less, preferably 280 µm or less, more preferably 250 µm or less.

### <Surface coating of the negative electrode plate>

The negative electrode plate having deposited on the surface thereof a substance having a composition different from that of the substance constituting the negative electrode plate may be used. Examples of the surface deposition substances include oxides, such as aluminum oxide, silicon oxide, titanium oxide, zirconium oxide, magnesium oxide, calcium oxide, boron oxide, antimony oxide, and bismuth oxide; sulfates, such as lithium sulfate, sodium sulfate, potassium sulfate, magnesium sulfate, calcium sulfate, and aluminum sulfate; and carbonates, such as lithium carbonate, calcium carbonate, and magnesium carbonate.

### <Area of the negative electrode plate>

With respect to the area of the negative electrode plate, there is no particular limitation. However, from the viewpoint of suppressing the deterioration of cycle life caused when repeating charging and discharging of the secondary battery and the deterioration due to high-temperature storage, it is preferred that the area of the negative electrode plate is as equivalent to the area of the positive electrode as possible because the proportion of the electrode which more uniformly and effectively acts is increased to improve the properties of the battery. Particularly, when the secondary battery is used at a large current, a design of the area of the negative electrode plate is important.

### [2-4. Separator]

The positive electrode and the negative electrode generally have disposed therebetween a separator for preventing the occurrence of short-circuiting. In this case, the separator is generally impregnated with the non-aqueous electrolytic solution of the present invention.

With respect to the material for and the form of the separator, there is no particular limitation, and a separator of a known material or form can be arbitrarily employed as long as the effects of the present invention are not markedly sacrificed. Especially, a separator formed from a material stable to the non-aqueous electrolytic solution of the present invention, such as a resin, a glass fiber, or an inorganic material, is used, and a separator in the form of a porous sheet or nonwoven fabric having excellent liquid retaining property is preferably used.

### <Material>

As a material for the resin or glass fiber separator, for example, a polyolefin, such as polyethylene or polypropylene, an aromatic polyamide, polytetrafluoroethylene, polyether sulfone, polyimide, polyester, a polyoxyalkylene, or a glass filter can be used. Of these, preferred are a glass filter and polyolefins, further preferred are polyolefins, and especially preferred are polyethylene and polypropylene. These materials may be used individually, or two or more types of the materials may be used in an arbitrary combination and in an arbitrary ratio. The above materials may be used in a stacked form.

### <Thickness>

The thickness of the separator is arbitrary, but is generally 1 µm or more, preferably 5 µm or more, further preferably 10 µm or more, and is generally 50 µm or less, preferably 40 µm or less, further preferably 30 µm or less. When the thickness of the separator is smaller than the above range, the separator is likely to be poor in insulation properties or mechanical strength. On the other hand, when the thickness of the separator is larger than the above range, it is likely that not only does battery performance, such as rate characteristics, become poor, but also the energy density of the whole of non-aqueous electrolyte secondary battery is lowered.

### <Porosity>

When a porous material, such as a porous sheet or nonwoven fabric, is used as a separator, the porosity of the separator is arbitrary. However, the porosity of the separator is generally 20% or more, preferably 35% or more, further preferably 45% or more, and is generally 90% or less, preferably 85% or less, further preferably 75% or less. When the porosity of the separator is smaller than the above range, it is likely that the film resistance is increased, causing the secondary battery to be poor in rate characteristics. On the other hand, when the porosity of the separator is larger than the above range, it is likely that the separator is lowered in mechanical strength, causing the insulation properties to become poor.

### <Average pore diameter>

The average pore diameter of the separator is arbitrary, but is generally 0.5 m or less, preferably 0.2 µm or less, and is generally 0.05 µm or more. When the average pore diameter of the separator is larger than the above range, short-circuiting is likely to occur. On the other hand, when the average pore diameter of the separator is smaller than the above range, it is likely that the film resistance is increased, causing the rate characteristics to become poor.

### <Inorganic separator>

On the other hand, as an inorganic material for separator, for example, an oxide, such as alumina, titania, or silicon dioxide, a nitride, such as aluminum nitride or silicon nitride, or a sulfate, such as barium sulfate or calcium sulfate, is used, and an inorganic material in a particle form or in a fiber form is used.

### <form>

Examples of forms of the separator include forms of a thin film, such as nonwoven fabric, woven fabric, and a microporous film. In the separator in the form of a thin film, one having a pore diameter of 0.01 to 1 µm and a thickness of 5 to 50 µm is preferably used. As a separator other than the separator in the form of the above-mentioned independent thin film, there can be used a separator having a composite porous layer containing particles of the above-mentioned inorganic material formed on the surface layer of the positive electrode and/or negative electrode using a binder made of a resin. For example, on both sides of the positive electrode, alumina particles having a 90% particle diameter of less than 1 µm are dispersed in a fluororesin which is a binder, such as PVdF, to form porous layers.

### <Gas permeability>

The properties of the separator in the non-aqueous electrolyte secondary battery can be grasped by a Gurley value. The Gurley value indicates how difficult air passes through a film in the thicknesswise direction of the film, and is represented by a period of time, in terms of a second, which is required for 100 ml of air to pass through the film. Thus, a smaller Gurley value means that air is more likely to pass through the film, and a larger Gurley value means that air is more unlikely to pass through the film. That is, a smaller Gurley value means that the communicating properties in the thicknesswise direction of the film are more excellent, and a larger Gurley value means that the communicating properties in the thicknesswise direction of the film are poorer. The communicating properties indicate the degree of communicating of pores in the thicknesswise direction of the film. A separator having a small Gurley value can be used in various applications. For example, when a separator having a small Gurley value is used as a separator for a non-aqueous lithium secondary battery, lithium ions easily move through the separator, which means that excellent battery performance is advantageously obtained. The Gurley value of the separator is arbitrary, but is preferably 10 to 1,000 seconds/100 ml, more preferably 15 to 800 seconds/100 ml, further preferably 20 to 500 seconds/100 ml. When the Gurley value of the separator is 1,000 seconds/100 ml or less, the electric resistance of the separator is substantially low, which is advantageous to the separator.

### <Method for producing a separator>

As examples of methods for obtaining a separator body or a porous film, specifically, there can be mentioned the following methods.
(1) An extraction method in which to a polyolefin resin is added a low molecular-weight material which is compatible to the polyolefin resin and which can be extracted in the subsequent step, and the resultant mixture is melt-kneaded and formed into a sheet, and the low molecular-weight material is extracted from the sheet after being stretched or before being stretched so that the sheet becomes porous.
(2) A stretching method in which a crystalline resin is formed into a sheet at a high draft ratio, and the resultant high-modulus sheet is subjected to low-temperature stretching and high-temperature stretching so that the sheet becomes porous.
(3) An interfacial peeling method in which an inorganic or organic filler is added to a thermoplastic resin, and the resultant mixture is melt-kneaded and formed into a sheet, and the sheet is peeled by stretching at the interface between the resin and the filler so that the sheet becomes porous.
(4) A β-form nucleating agent method in which a β-form nucleating agent is added to a polypropylene resin, and the resultant mixture is melt-kneaded and formed into a sheet, and the resultant sheet having formed therein β-form crystals is stretched so that the sheet becomes porous utilizing crystal transition.

The method for producing a separator may be either of a wet process or of a dry process.

### [2-5. Design of the battery]

### <Electrode group>

The electrode group may have any of a stacked structure having the above-mentioned positive electrode plate and negative electrode plate stacked through the above-mentioned separator, and a structure in which the above positive electrode plate and negative electrode plate have the above separator disposed therebetween and are spirally wound. The proportion of the volume of the electrode group to the internal volume of the battery (hereinafter, referred to as "electrode, group occupancy") is generally 40% or more, preferably 50% or more, and is generally 90% or less, preferably 80% or less.

When the electrode group occupancy is smaller than the above range, the battery capacity is likely to be reduced. On the other hand, when the electrode group occupancy is larger than the above range, it is likely that the void space is small so that the secondary battery is increased in the temperature, leading to a problem in that the members in the battery expand or the vapor pressure of the liquid component of the electrolyte becomes higher to increase the internal pressure, causing deterioration of various characteristics of the secondary battery, such as charging/discharging repeating performance or high-temperature storage characteristics, and further causing a gas release valve for lowering the internal pressure to operate.

### <Current collector structure>

In the electrode group of the above-mentioned stacked structure, a structure formed by binding together metal core portions of the individual electrode layers and welding the bound core portions to the terminal is advantageously used. When the area of a single electrode is increased, the internal resistance is increased, and therefore a method of forming a plurality of terminals in the electrode to reduce the resistance is also advantageously used. In the electrode group of the above-mentioned spirally wound structure, the internal resistance can be reduced by forming a plurality of lead structures in each of the positive electrode and the negative electrode and binding them together with the terminal.

### <Protective device>

As a protective device, there can be used, for example, a PTC (positive temperature coefficient) thermistor which is increased in the resistance when abnormal heat generation occurs or too large a current flows, a temperature fuse, and a valve (current cut-out valve) which cuts out the current flowing the circuit due to a rapid increase of the pressure or temperature in the battery upon abnormal heat generation. With respect to the above-mentioned protective device, one having conditions in which the device does not operate in the general use at a high current is preferably selected, and a battery design is more preferably employed such that abnormal heat generation or heat runaway is not caused without a protective device.

### <Outer casing>

The non-aqueous electrolyte secondary battery of the present invention generally comprises the above-mentioned non-aqueous electrolytic solution, negative electrode, positive electrode, separator and others which are contained in an outer casing. With respect to the outer casing, there is no particular limitation, and a known outer casing can be arbitrarily employed as long as the effects of the present invention are not markedly sacrificed.

With respect to the material for the outer casing, there is no particular limitation as long as it is a material stable to the non-aqueous electrolytic solution used. Specifically, a metal, such as a nickel-plated steel plate, stainless steel, aluminum, an aluminum alloy, a magnesium alloy, nickel, or titanium, or a stacked film of a resin and an aluminum foil (laminate film) is used. From the viewpoint of the weight reduction, a metal, such as aluminum or an aluminum alloy, or a laminate film is preferably used.

Examples of the outer casings using the above metal include those having a sealed structure obtained by welding the metals together by laser welding, resistance welding, or ultrasonic welding, and those having a calked structure obtained by caulking the above metals through a gasket made of a resin. Examples of the outer casings using the above-mentioned laminate film include those having a sealed structure obtained by heat-fusing the resin layers together. For improving the sealing properties, a resin different from the resin used in the laminate film may be disposed between the above resin layers. Particularly, when the resin layers are heat-fused through a current collector terminal to form a closed structure, bonding of a metal and a resin is made, and therefore, as a resin present between the metals, a resin having a polar group or a modified resin having introduced a polar group is preferably used.

### <Shape>

Further, the shape of the outer casing is arbitrary and, for example, any of a cylinder shape, a rectangle shape, a laminate type, a coin shape, and a large-size type may be used.

### EXAMPLES

Hereinbelow, the present invention will be described in more detail with reference to the following Examples and Comparative Examples, which should not be construed as limiting the scope of the present invention.

### [Production of a non-aqueous electrolyte secondary battery]

### preparation of a positive electrode>

90 Parts by mass of lithium nickel manganese cobalt oxide (LiNi_{1/3}Mn_{1/3}Co_{1/3}O₂), which is used as a positive electrode active material, 7 parts by mass of carbon black, and 3 parts by mass of polyvinylidene fluoride were mixed together, and N-methyl-2-pyrrolidone was added to the resultant mixture to obtain a slurry. The obtained slurry was uniformly applied to both surfaces of an aluminum foil having a thickness of 15 µm so that the coating weight became 11.85 mg•cm⁻², and dried, and then the resultant aluminum foil having the dried slurry was pressed so that the density of the positive electrode active material layer became 2.6 g•cm⁻³ to prepare a positive electrode.

### <Preparation of a negative electrode>

To graphite were added an aqueous dispersion of sodium carboxymethyl cellulose (sodium carboxymethyl cellulose concentration: 1% by mass) as a thickening agent and an aqueous dispersion of a styrene-butadiene rubber (styrene-butadiene rubber concentration: 50% by mass) as a binder, and the resultant was mixed using a disperser to obtain a slurry. The obtained slurry was uniformly applied to one surface of a copper foil having a thickness of 12 µm so that the coating weight became 6.0 mg•cm⁻², and dried, and then the resultant copper foil having the dried slurry was pressed so that the density of the negative electrode active material layer became 1.36 g•cm⁻³, prepared a negative electrode.

The graphite used has a d50 value of 10.9 µm, a BET specific surface area of 3.41 m²/g, and a tap density of 0.985 g/cm³. Further, the slurry was prepared so that the [graphite: sodium carboxymethyl cellulose:styrene-butadiene rubber] mass ratio in the dried negative electrode became 97.5:1.5:1.

### <Production of a non-aqueous electrolyte secondary battery>

The above-prepared positive electrode and negative electrode and a separator were stacked in the order of the negative electrode, separator, and positive electrode. The separator used was one which is made of polypropylene and has a thickness of 20 µm and a porosity of 54%. The thus obtained battery element was wrapped in an aluminum laminate film in a cylindrical form, and the non-aqueous electrolytic solution prepared in each of the below-mentioned Examples and Comparative Examples was injected into the wrapped element, followed by vacuum sealing, to produce a non-aqueous electrolyte secondary battery in a sheet form. Further, for increasing the adhesion between the electrodes, the sheet-form battery was sandwiched between glass plates and a pressure was applied to the glass plates.

### [Evaluation of the battery]

### <Initial charging/discharging test>

In a thermostatic chamber at 25°C, the sheet-form non-aqueous electrolyte secondary battery was charged at 0.05C for 10 hours, and then allowed to rest for 3 hours, and subsequently was charged at a constant current at 0.2C until the voltage became 4.1 V. The resultant secondary battery was further allowed to rest for 3 hours, and then charged at a constant current at 0.2C and at a constant voltage until the voltage became 4.1 V, and then discharged at a constant current at 1/3C until the voltage became 3.0 V.

Then, constant-current constant-voltage charging at 1/3C was performed until the voltage became 4.1 V, and subsequently constant-current discharging at 1/3C was performed until the voltage became 3.0 V, and a series of these operations was taken as one charging-discharging cycle and two cycles of the charging-discharging operations were performed.

Further, constant-current constant-voltage charging at 1/3C was performed until the voltage became 4.1 V, and then the resultant battery was stored at 60°C for 12 hours, so that the battery was stabilized. Then, constant-current constant-voltage charging at 1/3C was performed at 25°C until the voltage became 4.2 V, and subsequently constant-current discharging at 1/3C was performed until the voltage became 3.0 V, and a series of these operations was taken as one charging-discharging cycle and two cycles of the charging-discharging operations were performed. The discharge capacity finally obtained at that time was taken as an initial capacity. 1C means a current value at which the whole capacity of the battery is discharged in one hour.

### <Test for capacity maintaining ratio upon high-temperature storage>

The battery, which had been subjected to the above-mentioned initial charging/discharging test, was adjusted in voltage to 4.2 V, and stored at 60°C for one week. With respect to the battery after being stored, constant-current constant-voltage charging at 1/3C was performed at 25°C until the voltage became 4.2 V, and subsequently constant-current discharging at 1/3C was performed until the voltage became 3.0 V, and a series of these operations was taken as one charging-discharging cycle and three cycles of the charging-discharging operations were performed. The discharge capacity finally obtained at that time was taken as an after-high-temperature-storage capacity, and a ratio of the after-high-temperature-storage capacity to the initial capacity determined in the above initial charging/discharging test was determined as a capacity maintaining ratio upon high-temperature storage (%).

### <Test for evaluation of low-temperature discharge resistance>

With respect to the battery which had been subjected to the above-mentioned initial charging/discharging test and the battery which had been stored at 60°C in the above-mentioned test for capacity maintaining ratio upon high-temperature storage, each battery was adjusted in voltage to 3.72 V, and then discharged at a constant current at -30°C for 10 seconds using different current values. The voltages obtained after 10 seconds were plotted against various current values to determine a current value at which the voltage obtained after 10 seconds becomes 3 V. A point of the thus determined current value and a point obtained in the state of a closed circuit were connected to each other to obtain a straight line. A slope of the straight line obtained with respect to the battery which had been subjected to the initial charging/discharging test is defined as an initial low-temperature discharge resistance, and a slope of the straight line obtained with respect to the battery after being stored at a high temperature is defined as an after-high-temperature-storage low-temperature discharge resistance (hereinafter, these two discharge resistances are frequently collectively referred to as "low-temperature discharge resistance").

### [Example 11

In a dry argon atmosphere, satisfactorily dried LiPF₆ was dissolved in a mixture of ethylene carbonate, dimethyl carbonate, and ethylmethyl carbonate (volume ratio: 3:3:4) so that the concentration of LiPF₆ in the resultant non-aqueous electrolytic solution became 1 mol/L (this electrolytic solution is frequently referred to as "reference electrolytic solution").

A compound of the formula (1a) below was added to the reference electrolytic solution so that the content of the compound in the resultant non-aqueous electrolytic solution became 0.50% by mass, and a compound of the formula (2a) below was further added so that the content of the compound in the resultant non-aqueous electrolytic solution became 0.50% by mass, preparing a non-aqueous electrolytic solution.

Using the prepared electrolytic solution, a non-aqueous electrolyte secondary battery was produced by the above-mentioned method, and a capacity maintaining ratio upon high-temperature storage and a low-temperature discharge resistance were measured. The results of the measurement are shown in Table 1 below. A low-temperature discharge resistance is shown in terms of a ratio thereof (%) to the initial low-temperature discharge resistance obtained in the below-mentioned Comparative Example 14. This applies to the following Examples 2 to 8 and Comparative Examples 1 to 13.

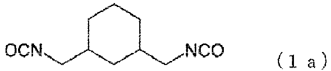

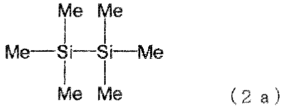

### [Example 2]

A non-aqueous electrolyte secondary battery was produced in substantially the same manner as in Example 1 except that the compound of the formula (1a) was added so that the content of the compound in the resultant non-aqueous electrolytic solution became 0.25% by mass, and that the compound of the formula (2a) was added so that the content of the compound in the resultant non-aqueous electrolytic solution became 0.25% by mass, and a capacity maintaining ratio upon high-temperature storage and a low-temperature discharge resistance were measured. The results of the measurement are shown in Table 1 below.

### [Example 3]

A non-aqueous electrolyte secondary battery was produced in substantially the same manner as in Example 1 except that the compound of the formula (2a) was added so that the content of the compound in the resultant non-aqueous electrolytic solution became 1.00% by mass, and a capacity maintaining ratio upon high-temperature storage and a low-temperature discharge resistance were measured. The results of the measurement are shown in Table 1 below.

### [Example 4]

A non-aqueous electrolyte secondary battery was produced in substantially the same manner as in Example 1 except that, instead of the compound of the formula (1a), a compound of the formula (3a) below was added to the non-aqueous electrolytic solution so that the content of the compound in the resultant non-aqueous electrolytic solution became 0.50% by mass, and a capacity maintaining ratio upon high-temperature storage and a low-temperature discharge resistance were measured. The results of the measurement are shown in Table 1 below.

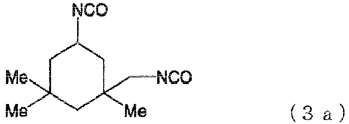

### [Example 5]

A non-aqueous electrolyte secondary battery was produced in substantially the same manner as in Example 1 except that, instead of the compound of the formula (1a), a compound of the formula (4a) below was added to the non-aqueous electrolytic solution so that the content of the compound in the resultant non-aqueous electrolytic solution became 0.50% by mass, and a capacity maintaining ratio upon high-temperature storage and a low-temperature discharge resistance were measured. The results of the measurement are shown in Table 1 below.

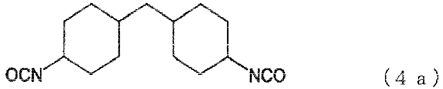

### [Example 6]

A non-aqueous electrolyte secondary battery was produced in substantially the same manner as in Example 1 except that vinylene carbonate (hereinafter, referred to as "VC") was further added to the non-aqueous electrolytic solution so that the content of the VC in the resultant non-aqueous electrolytic solution became 0.50% by mass, and a capacity maintaining ratio upon high-temperature storage and a low-temperature discharge resistance were measured. The results of the measurement are shown in Table 1 below.

### [Example 7]

A non-aqueous electrolyte secondary battery was produced in substantially the same manner as in Example 1 except that monofluoroethylene carbonate (hereinafter, referred to as "FEC") was further added to the non-aqueous electrolytic solution so that the content of the FEC in the resultant non-aqueous electrolytic solution became 0.50% by mass, and a capacity maintaining ratio upon high-temperature storage and a low-temperature discharge resistance were measured. The results of the measurement are shown in Table 1 below.

### [Example 8]

A non-aqueous electrolyte secondary battery was produced in substantially the same manner as in Example 1 except that lithium bis(oxalato)borate (hereinafter, referred to as "LiBOB") was further added to the non-aqueous electrolytic solution so that the content of the LiBOB in the resultant non-aqueous electrolytic solution became 0.50% by mass, and a capacity maintaining ratio upon high-temperature storage and a low-temperature discharge resistance were measured. The results of the measurement are shown in Table 1 below.

### [Comparative Example 1]

A non-aqueous electrolyte secondary battery was produced in substantially the same manner as in Example 1 except that the compound of the formula (2a) was not added to the non-aqueous electrolytic solution, and a capacity maintaining ratio upon high-temperature storage and a low-temperature discharge resistance were measured. The results of the measurement are shown in Table 1 below.

### [Comparative Example 2]

A non-aqueous electrolyte secondary battery was produced in substantially the same manner as in Example 1 except that the compound of the formula (2a) was not added to the non-aqueous electrolytic solution, and that, instead of the compound of the formula (1a), the compound of the formula (3a) was added so that the content of the compound in the resultant non-aqueous electrolytic solution became 0.50% by mass, and a capacity maintaining ratio upon high-temperature storage and a low-temperature discharge resistance were measured. The results of the measurement are shown in Table 1 below.

### [Comparative Example 3]

A non-aqueous electrolyte secondary battery was produced in substantially the same manner as in Example 1 except that the compound of the formula (2a) was not added to the non-aqueous electrolytic solution, and that, instead of the compound of the formula (1a), the compound of the formula (4a) was added so that the content of the compound in the resultant non-aqueous electrolytic solution became 0.50% by mass, and a capacity maintaining ratio upon high-temperature storage and a low-temperature discharge resistance were measured. The results of the measurement are shown in Table 1 below.

### [Comparative Example 4]

A non-aqueous electrolyte secondary battery was produced in substantially the same manner as in Example 1 except that the compound of the formula (1a) was not added to the non-aqueous electrolytic solution, and a capacity maintaining ratio upon high-temperature storage and a low-temperature discharge resistance were measured. The results of the measurement are shown in Table 1 below.

### [Comparative Example 5]

A non-aqueous electrolyte secondary battery was produced in substantially the same manner as in Example 6 except that the compound of the formula (1a) and the compound of the formula (2a) were not added to the non-aqueous electrolytic solution, and a capacity maintaining ratio upon high-temperature storage and a low-temperature discharge resistance were measured. The results of the measurement are shown in Table 1 below.

### [Comparative Example 6]

A non-aqueous electrolyte secondary battery was produced in substantially the same manner as in Example 7 except that the compound of the formula (1a) and the compound of the formula (2a) were not added to the non-aqueous electrolytic solution, and a capacity maintaining ratio upon high-temperature storage and a low-temperature discharge resistance were measured. The results of the measurement are shown in Table 1 below.

### [Comparative Example 7]

A non-aqueous electrolyte secondary battery was produced in substantially the same manner as in Example 8 except that the compound of the formula (1a) and the compound of the formula (2a) were not added to the non-aqueous electrolytic solution, and a capacity maintaining ratio upon high-temperature storage and a low-temperature discharge resistance were measured. The results of the measurement are shown in Table 1 below.

### [Comparative Example 8]

A non-aqueous electrolyte secondary battery was produced in substantially the same manner as in Example 6 except that the compound of the formula (2a) was not added to the non-aqueous electrolytic solution, and a capacity maintaining ratio upon high-temperature storage and a low-temperature discharge resistance were measured. The results of the measurement are shown in Table 1 below.

### [Comparative Example 9]

A non-aqueous electrolyte secondary battery was produced in substantially the same manner as in Example 6 except that the compound of the formula (1a) was not added to the non-aqueous electrolytic solution, and a capacity maintaining ratio upon high-temperature storage and a low-temperature discharge resistance were measured. The results of the measurement are shown in Table 1 below.

### [Comparative Example 10]

A non-aqueous electrolyte secondary battery was produced in substantially the same manner as in Comparative Example 1 except that, instead of the compound of the formula (1a), a compound of the formula (5a) below was added to the non-aqueous electrolytic solution so that the content of the compound in the resultant non-aqueous electrolytic solution became 0.50% by mass, and a capacity maintaining ratio upon high-temperature storage and a low-temperature discharge resistance were measured. The results of the measurement are shown in Table 1 below.

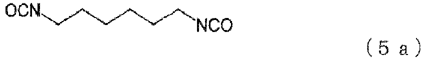

### [Comparative Example 11]

A non-aqueous electrolyte secondary battery was produced in substantially the same manner as in Example 1 except that, instead of the compound of the formula (1a), the compound of the formula (5a) was added to the non-aqueous electrolytic solution so that the content of the compound in the resultant non-aqueous electrolytic solution became 0.50% by mass, and a capacity maintaining ratio upon high-temperature storage and a low-temperature discharge resistance were measured. The results of the measurement are shown in Table 1 below.

### [Comparative Example 12]

A non-aqueous electrolyte secondary battery was produced in substantially the same manner as in Comparative Example 8 except that, instead of the compound of the formula (1a), the compound of the formula (5a) was added to the non-aqueous electrolytic solution so that the content of the compound in the resultant non-aqueous electrolytic solution became 0.50% by mass, and a capacity maintaining ratio upon high-temperature storage and a low-temperature discharge resistance were measured. The results of the measurement are shown in Table 1 below.

### [Comparative Example 13]

A non-aqueous electrolyte secondary battery was produced in substantially the same manner as in Example 6 except that, instead of the compound of the formula (1a), the compound of the formula (5a) was added to the non-aqueous electrolytic solution so that the content of the compound in the resultant non-aqueous electrolytic solution became 0.50% by mass, and a capacity maintaining ratio upon high-temperature storage and a low temperature discharge resistance were measured. The results of the measurement are shown in Table 1 below.

### [Comparative Example 14]

A non-aqueous electrolyte secondary battery was produced in substantially the same manner as in Example 1 except that the reference electrolytic solution was used as a non-aqueous electrolytic solution, and a capacity maintaining ratio upon high-temperature storage and a low-temperature discharge resistance were measured. The results of the measurement are shown in Table 1 below. As mentioned above, a low-temperature discharge resistance (initial low-temperature discharge resistance and after-high-temperature-storage low-temperature discharge resistance) is shown in terms of a ratio thereof (%) to the initial low-temperature discharge resistance obtained in the present Comparative Example.

[Table 1]

**Table 1**

| | Specific/conventional NCO compound | Specific/conventional NCO compound /mass% | Specific Si compound | Specific Si compound /mass% | Other additive | Other additive /mass% | Initial low-temperature discharge resistance (%) | After-high-temperature-storage low-temperature discharge resistance (%) | Capacity maintaining ratio upon high-temperature storage (%) |
|---|---|---|---|---|---|---|---|---|---|
| Example 1 | Formula (1a) | 0.50 | Formula (2a) | 0.50 | - | - | 99.3 | 9D.5 | 97.0 |
| Example 2 | Formula (1a) | 0.25 | Formula | 0.25 | - | - | 99.6 | 95.1 | 96.4 |
| Example 3 | Formula (1a) | 0.50 | Formula (2a) | 1.00 | - | - | 87.8 | 87.2 | 96.9 |
| Example 4 | Formula (3a) | 0.50 | Formula (2a) | 0.50 | - | - | 64.9 | 92.8 | 94.8 |
| Example 5 | Formula (4a) | 0.50 | Formula (2a) | 0.50 | - | - | 95.0 | 95.4 | 96.4 |
| Example 6 | Formula (1a) | 0.50 | Formula (2a) | 0.50 | VC | 0.50 | 119.6 | 193.0 | 97.3 |
| Example 7 | Formula (1a) | 0.50 | Formula (2e) | 0.50 | FEC | 0.50 | 111.3 | 112.5 | 97.2 |
| Example 8 | Formula (1a) | 0.50 | Formula (2a) | 0.50 | LiBOB | 0.50 | 147.0 | 103.8 | 98.6 |
| Comparative Example 1 | Formula (1a) | 0.50 | - | - | - | - | 105.8 | 111.8 | 96.9 |
| Comparative Example 2 | Formula (3a) | 0.50 | - | - | - | - | 94.4 | 110.4 | 94.1 |
| Comparative Example 3 | Formula (4a) | 0.50 | - | - | - | - | 101.7 | 111.3 | 96.1 |
| Comparative Example 4 | - | - | Formula (2a) | 0.50 | - | - | 78.2 | 90.2 | 96.1 |
| Comparative Example 5 | - | - | - | - | VC | 0.50 | 101.1 | 115.3 | 95.9 |
| Comparative Example 6 | - | - | - | - | FEC | 0.50 | 112.0 | 132.8 | 94.3 |
| Comparative Example 7 | - | - | - | - | LiBOB | 0.50 | 121.6 | 122.4 | 96.9 |
| Comparative Example 8 | Formula (1a) | 0.50 | - | - | VC | 0.50 | 148.2 | 207.0 | 97.0 |
| Comparative Example 9 | - | - | formula (2a) | 0.50 | VC | 0.50 | 98.6 | 103.3 | 98.3 |
| Comparative Example 10 | Formula (5a) | 0.50 | | - | - | - | 148.5 | 201.1 | 97.0 |
| Comparative Example 11 | Formula (5a) | 0.50 | Formula (2a) | 0.50 | - | - | 151.1 | 170.2 | 97.1 |
| Comparative Example 12 | Formula (5a) | 0.50 | | - | VC | 0.50 | 267.9 | 353.3 | 97.1 |
| Comparative Example 13 | Formula (5a) | 0.50 | Formula (2a) | 0.50 | VC | 0.50 | 240.0 | 353.7 | 97.3 |
| Comparative Example 14 | - | - | - | - | - | - | 100.0 | 113.8 | 85.8 |

From Table 1, it is apparent that, when using a specific NCO compound (Comparative Example 1), the low-temperature discharge resistance is remarkably improved, as compared to that in the case using the compound of the formula (5a) which is a conventional NCO compound (Comparative Example 10). In addition, when using a specific NCO compound, the capacity maintaining ratio upon high-temperature storage equivalent to that obtained when using a conventional NCO compound was maintained. Further, a comparison made between Comparative Example 1 or 10 and Comparative Example 14 clearly shows that the capacity maintaining ratio upon high-temperature storage is remarkably improved by adding a specific NCO compound or a conventional NCO compound.

The above-mentioned tendency that the capacity maintaining ratio upon high-temperature storage is maintained was similarly seen in the case where VC was further added (Comparative Examples 8, 9, 12, and 13), but the further addition of VC caused the low-temperature discharge resistance to become poor. When VC alone is used (Comparative Example 5), the low-temperature discharge resistance becomes slightly poor and the capacity maintaining ratio upon high-temperature storage has almost no change. Further, a comparison made between Comparative Examples 1 and 8 and a comparison made between Comparative Examples 10 and 12 clearly show that, especially when using a conventional NCO compound, the degree with which the low-temperature discharge resistance becomes poor due to the addition of VC is large.

Further, it is apparent that, by adding a specific Si compound to the reference electrolytic solution (Comparative Example 4), the low-temperature discharge resistance is improved. The reason for this is presumed that the resistance of the negative electrode film was improved as mentioned above. This tendency was similarly seen in the case where VC was further added (Comparative Example 9). On the other hand, the capacity maintaining ratio upon high-temperature storage is also improved; however, it is apparent that the effect of improving the capacity maintaining ratio upon high-temperature storage is poorer than that obtained when using a specific NCO compound.

As seen from Table 1, when a conventional NCO compound and a specific Si compound were used in combination (Comparative Examples 11 and 13), the capacity maintaining ratio upon high-temperature storage was excellent, but the low-temperature discharge resistance was poor. On the other hand, when a specific NCO compound and a specific Si compound were used in combination (Examples 1 to 6), the capacity maintaining ratio upon high-temperature storage as high as conventional one was maintained and the low-temperature discharge resistance was remarkably improved as compared to a conventional value, and the degree with which the low-temperature discharge resistance becomes poor due to the addition of VC was small. With respect to Example 4, a comparison with Comparative Example 2 clearly shows that, by using a specific NCO compound and a specific Si compound in combination, the low-temperature discharge resistance is improved, and the capacity maintaining ratio upon high-temperature storage is also improved.

Further, as apparent from a comparison made between Examples 7 and 8 and a comparison made between Comparative Examples 6 and 7, when FEC or LiBOB is added in addition to a specific NCO compound and a specific Si compound, the capacity maintaining ratio upon high-temperature storage is improved while maintaining the low-temperature discharge resistance at a low value.

The reason for the above results is presumed as follows. When a conventional NCO compound is used, the resultant negative electrode film has a high density and hence the negative electrode resistance is large, and further the high film density causes the reaction of the specific Si compound on the negative electrode to be inhibited. Meanwhile, the negative electrode film derived from the specific NCO compound has a low density and hence the negative electrode resistance is small, and further the low film density causes the reaction of the specific Si compound on the negative electrode to more effectively proceed.

As apparent from the above results, by using the non-aqueous electrolytic solution of the present invention, it is possible to achieve a non-aqueous electrolyte secondary battery having both a low-temperature discharge resistance and a capacity maintaining ratio upon high-temperature storage each at high level.

### INDUSTRIAL APPLICABILITY

By using the non-aqueous electrolytic solution of the present invention, the non-aqueous electrolyte secondary battery can be improved in the low-temperature discharge resistance and the capacity deterioration upon high-temperature storage. Therefore, the non-aqueous electrolytic solution of the present invention and the non-aqueous electrolyte secondary battery using the same can be advantageously used in known various applications. Further, they can also be advantageously used in electrolytic capacitors using a non-aqueous electrolytic solution, such as a lithium-ion capacitor.

Specific examples of the applications include a laptop personal computer, a pen-input type personal computer, a mobile personal computer, an electronic book player, a cell phone, a portable facsimile, a portable copying machine, a portable printer, a portable audio player, a video movie player, a liquid crystal television set, a hand-held cleaner, a portable CD player, a minidisc player, a transceiver, an electronic organizer, a calculator, a memory card, a portable tape recorder, a radio receiver, a backup power source, a motor, an automobile, a bike, a bicycle fitted with a motor, a bicycle, a lighting fixture, a toy, a video game machine, a clock, an electric tool, a stroboscope, a camera, a load-leveling power source, a natural energy storing power source, and a lithium-ion capacitor.

## Claims

1. A non-aqueous electrolytic solution comprising an electrolyte and a non-aqueous solvent, the non-aqueous electrolytic solution containing a compound represented by the following formula (1) and a compound represented by the following formula (2):
OCN-Q-NCO Formula (1)
wherein Q represents a divalent organic group having 2 to 10 carbon atoms, wherein the organic group has a tertiary or quaternary carbon atom; 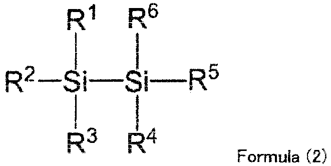 wherein each of R¹ to R⁶ independently represents a hydrogen atom, an alkyl group, alkenyl group, alkynyl group, or aryl group having 1 to 10 carbon atoms and optionally being substituted with a halogen atom, or a silane group having 1 to 10 silicon atoms and optionally being substituted with a halogen atom, and at least two of R¹ to R⁶ are optionally bonded together to form a ring.

2. The non-aqueous electrolytic solution according to claim 1, wherein, in the formula (1), Q has a cyclic skeleton.

3. The non-aqueous electrolytic solution according to claim 1 or 2, wherein, in the formula (2), R¹ to R⁶ are a hydrogen atom or an alkyl group having 1 to 4 carbon atoms and optionally being substituted with a halogen atom.

4. The non-aqueous electrolytic solution according to any one of claims 1 to 3, wherein, in the formula (1), Q has a cyclohexane skeleton.

5. The non-aqueous electrolytic solution according to any one of claims 1 to 4, wherein, in the formula (2), R¹ to R⁶ are a methyl group or an ethyl group.

6. The non-aqueous electrolytic solution according to any one of claims 1 to 5, wherein the compound represented by the formula (1) is a compound represented by the following formula:

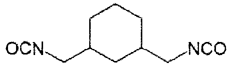

7. The non-aqueous electrolytic solution according to any one of claims 1 to 6, wherein the compound represented by the formula (2) is a compound represented by the following formula:

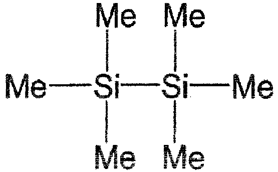

8. The non-aqueous electrolytic solution according to any one of claims 1 to 7, wherein the compound represented by the formula (1) is contained in an amount of 0.01 to 10% by mass, based on the total mass of the non-aqueous electrolytic solution.

9. The non-aqueous electrolytic solution according to any one of claims 1 to 8, wherein the compound represented by the formula (2) is contained in an amount of 0.01 to 10% by mass, based on the total mass of the non-aqueous electrolytic solution.

10. The non-aqueous electrolytic solution according to any one of claims 1 to 9, which further contains a compound which is reduced on a negative electrode during the first charging of a battery.

11. The non-aqueous electrolytic solution according to claim 10, wherein the compound which is reduced on a negative electrode is at least one member selected from the group consisting of vinylene carbonate, vinylethylene carbonate, fluoroethylene carbonate, succinic anhydride, lithium bis(oxalato)borate, lithium tetrafluorooxalatophosphate, lithium difluorobis(oxalato)phosphate, and lithium tris(oxalato)phosphate.

12. The non-aqueous electrolytic solution according to claim 10 or 11, wherein the compound which is reduced on a negative electrode is at least one member selected from the group consisting of vinylene carbonate, fluoroethylene carbonate, and lithium bis(oxalato)borate.

13. A non-aqueous electrolyte secondary battery comprising a negative electrode capable of storing and releasing metal ions, a positive electrode capable of storing and releasing metal ions, and the non-aqueous electrolytic solution according to any one of claims 1 to 12.

14. The non-aqueous electrolyte secondary battery according to claim 13, wherein the positive electrode capable of storing and releasing metal ions comprises a layer transition metal oxide, a spinel structure type oxide, or an olivine structure type oxide.

15. The non-aqueous electrolyte secondary battery according to claim 13 or 14, wherein the negative electrode capable of storing and releasing metal ions comprises a carbonaceous material.
